(19) Europäisches Patentamt
European Patent Office
Office européen des brevets

(11) **EP 1 768 420 A1**

(12) **EUROPEAN PATENT APPLICATION**
published in accordance with Art. 158(3) EPC

(43) Date of publication:
**28.03.2007 Bulletin 2007/13**

(51) Int Cl.:
*H04N 7/32* (2006.01)

(21) Application number: **05765586.2**

(22) Date of filing: **07.07.2005**

(86) International application number:
**PCT/JP2005/012568**

(87) International publication number:
**WO 2006/006489 (19.01.2006 Gazette 2006/03)**

(84) Designated Contracting States:
**DE FR GB**

(30) Priority: **13.07.2004 JP 2004205806**

(71) Applicant: **MATSUSHITA ELECTRIC INDUSTRIAL CO., LTD.
Osaka 571-8501 (JP)**

(72) Inventor: **INOUE, Akihiko
c/o Mat. Elec. Ind. Co., Ltd.
Osaka-shi, Osaka 540-6319 (JP)**

(74) Representative: **Pautex Schneider, Nicole Véronique
Novagraaf International SA
25, avenue du Pailly
1220 Les Avanchets - Geneva (CH)**

(54) **MOTION DETECTION DEVICE**

(57) Reference picture data for full-pel-precision motion detection and picture data of a macroblock to be encoded are transferred from an SDRAM (41) to a local memory (31). The full-pel-precision motion detection is performed by a full-pel-precision motion detecting unit (21), and the transfer region of the reference picture data for quarter-pel-precision motion detection is determined based on the result of the full-pel-precision motion detection. After transferring the reference picture data for half-pel-precision motion detection, the half-pel-precision motion detection by a half-pel-precision motion detecting unit 22 and the reference picture data transfer for quarter-pel-precision motion detection are practiced concurrently. The quarter-pel-precision motion detection is practiced by a quarter-pel-precision motion detecting unit (23). Consequently, the pipeline stages and the pipeline buffers can be diminished in number, thereby accelerating the pipeline processing.

Fig. 2

**Description**

Technical Field

The present invention relates to a motion picture encoding technology, especially to a motion detection device which detects a motion vector of a picture to be encoded, using the picture to be encoded and the reference picture.

Background Art

Today, the transmission technology and storage technology of a motion picture are very important technologies to enjoy enriched life.

For example, these technologies have realized a videophone in the remote place using a portable information terminal. In the videophone, motion pictures can be mutually transmitted synchronizing with voice. Therefore, it is possible to realize the communication which has richer power of expression compared with the former products. The transmission path of the videophone is radio and the present transmission speed is 64 kbps (bits per second). There is a possibility of speeding up for it up to about 2 Mbps in the future. However, in order to enhance the image quality of the picture to transmit at a comparatively low transmission speed, the transmission technology of the motion picture, especially the compression-encoding technique of the motion picture is important.

The other important technology, that is, the storage technology of the motion picture is progressing every year. In recent years, it is possible to record a TV program in a digital system using a DVD (Digital Versatile Disk) recorder. DVD recorders extend the number of selling every year, and it is a matter of time that all VHS recorders are replaced by DVD recorders. Also in the DVD recorder, it is an important selling point that it can record a long-hour high-quality picture like in the VHS recorder. Although the recording density of the record media (DVD-RAM, DVD-RW, blue-ray disc, etc.) used for the DVD recorder is advancing every year, the recording density in the present condition has not advanced enough to record a long-hour high-quality picture of hi-vision programs. The motion picture encoding technology which encodes an image at a low bit rate without lowering the image quality becomes important in order to record an image of long hours into a limited area of the record medium, maintaining the image quality.

Various systems are proposed for the motion picture encoding technology. As standards of image compression technology, there are H.261 and H.263 of ITU-T (ITU Telecommunication Standardization Sector), and MPEG-1, MPEG-2 and MPEG-4 of ISO (International Organization for Standardization), etc. (MPEG is the abbreviation of Moving Picture Experts Group.)

In these motion picture encodings, the input picture as the object of encoding is divided into macroblocks, each of which is composed of a 16-pixel-by-16-pixel luminance component, an 8-pixel-by-8-pixel chroma component (Cb), and an 8-pixel-by-8-pixel chroma component (Cr). As for each macroblock, a block which is most similar to the macroblock is searched in the reference picture (the so-called motion detection processing is performed), then difference of the macroblock and the searched block of the reference picture is taken. The difference is converted into a frequency domain, and variable-length encoded into a bit stream.

The processing which influences an image quality greatly in the encoding processing is motion detection processing. The motion-detection section which is an important component in an MPEG encoding device is explained first.

Among various techniques existing in the motion detection, the most typical method is a block matching method. The block matching method chooses a macroblock of the current picture and a block which is generated from a specific range (it is henceforth called a search range) in a reference picture and possesses the same size as the macroblock, performs operation at a pixel level between them, calculates an evaluation value which indicates a degree of correlation, and detects as a motion vector a position on the reference picture which brings a result with the best evaluation value. As the evaluation value, a sum of absolute difference (SAD) and a sum of squared difference (SSD) are generally used. The degree of correlation is regarded as being high when the value is small.

There are conventional examples which performed the motion detection hierarchically (refer to a document 1 (Published Japanese patent application 2002-218474 (Fig. 3)) and a document 2 (Published Japanese patent application 2001-15872)). For example, the document 1 discloses a technology, wherein, in order to perform detection of a motion vector to a half-pel precision, motion vector detection of a full-pel precision is performed in the first step in a comparatively large search range, and in the second step, motion vector detection to a half-pel precision is performed in the circumference of the motion vector detected in the first step, but in a search range smaller than in the first step.

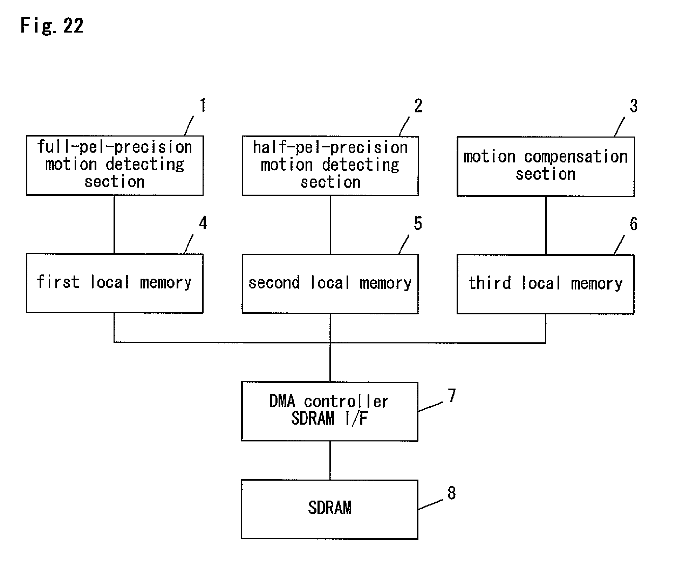

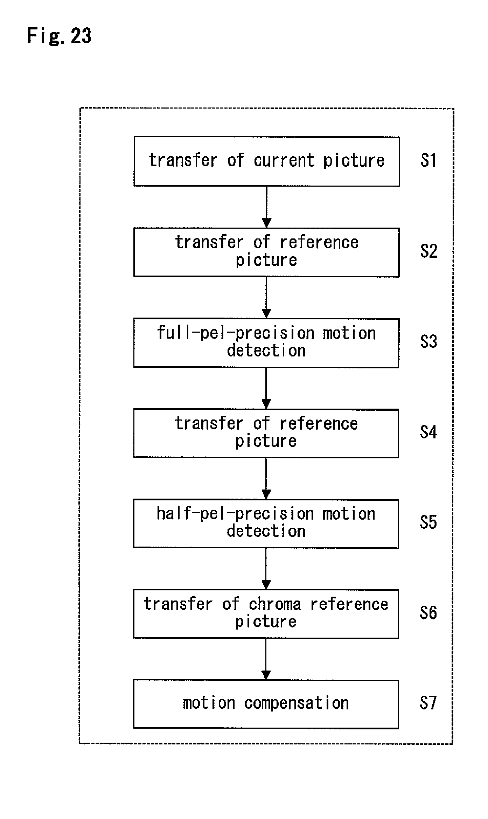

With reference to Fig. 22 and Fig. 23, the method of the motion detection by the conventional art is explained concretely.

Fig. 22 is a block diagram illustrating the conventional general motion detection device. The conventional general motion detection device shown in Fig. 22 comprises a full-pel-precision motion detecting section 1, a half-pel-precision motion detecting section 2, a motion compensation section 3, a first local memory 4, a second local memory 5, a third local memory 6, a DMA controller 7, and a SDRAM 8.

Fig. 23 is a flow chart of the conventional general motion detection device.

In Step S1 of Fig. 23, a macroblock to be encoded (it is hereafter called a current macroblock) is chosen from the input picture stored in the SDRAM 8, and is transferred to the first local memory 4.

In Step S2, the image data of a motion detection region determined from the current macroblock, i.e., the image data of a search range, (for example, image data of the search range of -32≤X≤+32 and -32≤Y≤+32) is transferred from the SDRAM 8 to the first local memory 4 as a reference picture.

In Step S3, the full-pel-precision motion detecting section 1 performs full-pel-precision motion detection to the current macroblock and the reference picture in the search range, which were transferred to the first local memory 4. In the full-pel-precision motion detection, using only integer pixels (or full pels), the full-pel-precision motion detecting section 1 detects, from the search range, a block which is of the same size and possesses the strongest correlation with the current macroblock, thereby determining a motion vector. The motion vector is expressed in terms of the relative position of the coordinate at the upper-left corner of the detected block, to the coordinate at the upper-left corner of the current macroblock. The strength of the correlation is evaluated as the sum of absolute difference (SAD) and sum of squared difference (SSD) of the luminance component of the corresponding pixels in two blocks.

When the hierarchized motion detection is performed, the search range of the full-pel-precision motion detection is generally larger than the search range of the motion detection in the latter layers. Therefore, the required memory capacity becomes large.

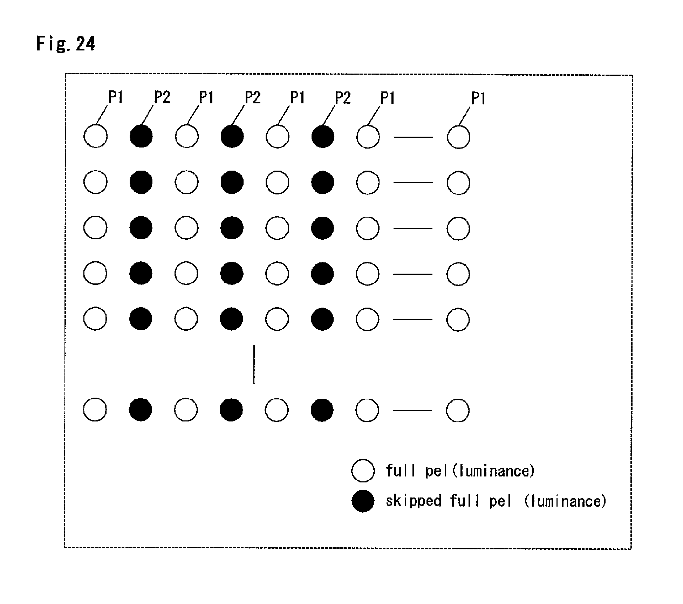

In order to avoid memory-capacity increase, there is a method of decreasing the accuracy of the motion detection, by performing pixel skipping and transferring the remaining pixels. Fig. 24 shows the integer pixels skipped for every two pixels. Namely, in the example shown in Fig. 24, pixels P2 are skipped in the horizontal direction for every two pixels, and only pixels P1 are used as a reference picture. As the result of such pixel skipping, the detection accuracy in the horizontal direction will fall to one half, as compared with a case where the pixel skipping is not performed. However, the area of the reference picture which should be stored in the first local memory 4 can be reduced to one half. This method can search the same search range with a small memory capacity. Or the motion detection in a wide range can be performed with the same memory capacity. Which kind of pixel skipping should be adopted is determined by the trade-off relationship between the image quality degradation due to the decrease in the detection accuracy and the image quality improvement due to the increase in the search range.

Now going back to Fig. 23, in Step S4, a reference picture required for half-pel-precision motion detection is transferred from the SDRAM 8 to the second local memory 5, based on the motion vector MV-INT calculated by the full-pel-precision motion detection in Step S3.

When the pixels of the reference picture for the full-pel-precision motion detection are skipped as mentioned above, it is necessary to retrieve again a reference picture for the half-pel-precision motion detection from the SDRAM 8. This is because the adjoining integer pixels are definitely required in order to calculate half pels according to the standard, as described later. When performing the half-pel-precision motion detection to eight pieces of half pels at the circumference of the full-pel-precision motion vector MV-INT, a picture of 18 pixels in the horizontal direction by 18 lines in the vertical direction, starting from the coordinates position moved by -1 in the x direction and by -1 in the y direction, on the basis of the motion vector MV-INT, is retrieved from the reference picture stored in the SDRAM 8, and is transferred to the second local memory 5. When only 32-bitwise access to the SDRAM 8 is allowed, the extra pixel data, which is not necessary as the reference picture, may be read, and the total data may sometimes amount to the data of a picture composed of 24 pixels in the horizontal direction by 18 lines in the vertical direction at the maximum.

In Step S5, the half-pel-precision motion detection section 2 performs the half-pel-precision motion detection. For example, in eight positions of the circumference of the motion vector MV-INT, the reference picture transferred to the second local memory 5 in Step S4 is used to generate eight pieces of half pels. Then the sum-of-absolute-difference operation is performed for the current macroblock and the eight pieces of half pels plus the integer pixel located at the search center position.

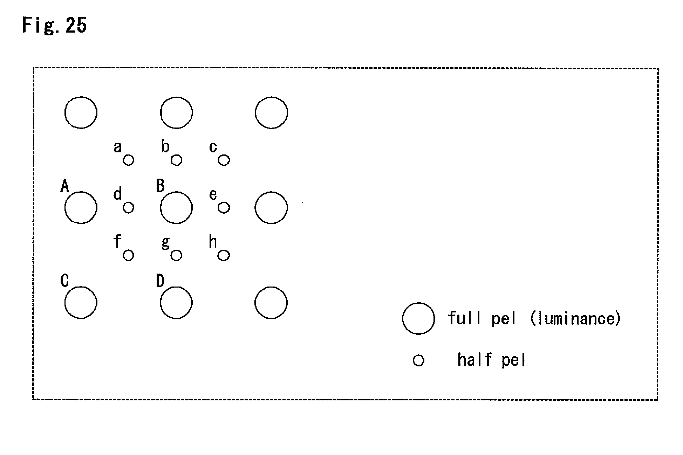

Fig. 25 shows the half pels generated around the integer pixel B. Namely, the half pels a-h are generated around the integer pixel B which is located at the search center position. In the case of the simple profile of MPEG-4, the half pels are computed as follows using integer pixels A-D.

In Fig. 25, a half pel f and a half pel d are respectively computed as follows,

$$f = (A+B+C+D+2-R)/4,$$

$$d = (A+B+1-R)/2,$$

where R is called a rounding control number and substituted by "0" or "1".

The half-pel-precision motion detection section 2 determines the point at which the value of the sum of absolute difference becomes the smallest, among the pixels of nine points in total, including the integer pixel B at the search center position and eight pieces of half pels a-h around it. The motion vector MV-HALF with a half-pel precision is computed by adding to the motion vector MV-INT the offset coordinates determined by the search center position and the point at which the obtained value of the sum of absolute difference becomes the smallest.

In order to enhance detection accuracy, quarter-pel-precision motion detection may be further performed based on the motion vector MV-HALF calculated by the half-pel-precision motion detection. For example, as in the half-pel-precision motion detection, in eight points of the circumference of the motion vector MV-HALF, the reference picture is used to generate eight pieces of quarter pels. Then a point at which the value of the sum of absolute difference becomes the smallest is searched for the pixels of a total of nine points, including the half pel at the search center position, and eight pieces of quarter pels generated around it. The motion vector with a quarter-pel precision is computed by adding the offset coordinates determined by the search center position and the searched point, to the motion vector MV-HALF. In Figs. 22 and 23, the components and processing steps in the quarter-pel-precision motion detection are omitted and not illustrated.

In Step S6, a reference picture of the position which is indicated by the motion vector finally determined in the half-pel-precision motion detection of Step S5 is transferred from the SDRAM 8 to the third local memory 6, for the motion compensation that follows the motion detection.

Generally, the motion vector detection is performed to the luminance component of the pixel data. Therefore, in many cases, as for the luminance component, the reference area that has been stored to the second local memory 5 in the half-pel-precision motion detection includes the area required for the motion compensation. In order to reduce data transfer amount, in one case, the data of the second local memory 5 may be transferred to the third local memory 6, and in another case, the motion compensation section 3 may access directly to the second local memory 5. However, the chroma component has not been transferred to the second local memory 5; therefore, it is necessary to transfer the chroma component from the SDRAM 8 to the third local memory 6.

In Step S7, the motion compensation section 3 performs the motion compensation. The picture data of the chroma component to be acquired for the motion compensation is determined by the chrominance motion vector which is determined based on the motion vector of the luminance component or the luminance motion vector. In MPEG-4, the chrominance motion vector is defined by the luminance motion vector multiplied by 1/2. For example, when the xy coordinates (0.5, 1.5) of the luminance motion vector is multiplied by 1/2, it becomes to (0.25, 0.75), but the coordinates are rounded to (0.5, 0.5).

The motion picture encoding is composed of plural steps of processing including motion detection, motion compensation, DCT, variable length encoding, etc. as mentioned above. If these plural steps of processing are executed in units of a macroblock using one hardware resource (for example, a processor), the processing of a macroblock cannot be started until the processing of the former macroblock is completed. In such sequential processing, when a screen size is large or an input frame rate is large, the so-called frame-dropping may arise due to too late macroblock processing.

In order to solve the issue, there is a method of preparing the hardware resources for every processing unit, and executing the macroblock processing in pipeline.

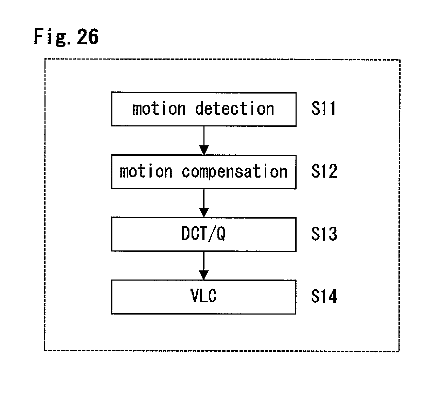

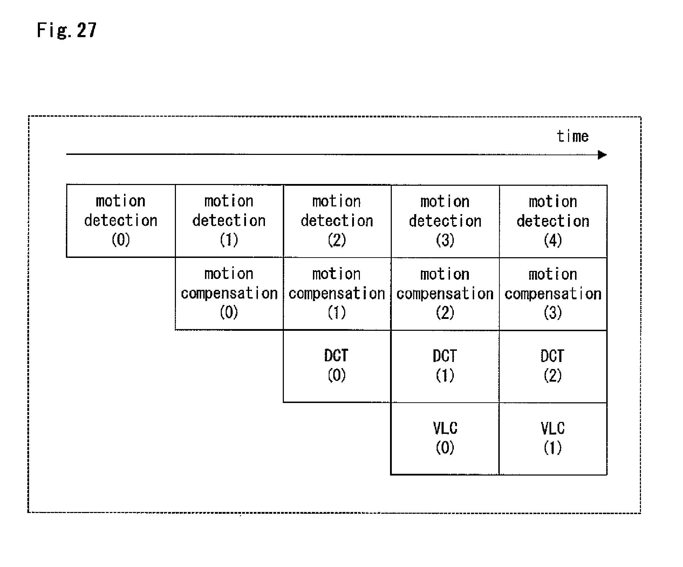

Fig. 26 is the flow chart of a motion picture encoding. As shown in Fig. 26, a general motion picture encoding includes motion detection at Step S11, motion compensation at Step S12, DCT / quantization processing at Step S13 and variable length encoding at Step S14. If the processing is divided into a pipeline of four stages, the processing will be practiced as shown in Fig. 27.

Fig. 27 shows the pipeline processing of the motion picture encoding. In the figure, the horizontal axis represents time and the number in ( ) of each processing indicates the number of macroblock currently treated. In the pipeline processing, as shown in Fig. 27, when the motion detection processing of macroblock number "0" is completed, the motion compensation processing of macroblock number "0" is started, and the motion detection processing of macroblock number "1" is also started simultaneously.

Assuming that the longest processing time among the processing time of four steps of processing shown in Fig. 27 is time T, the pipeline processing outputs a stream of macroblocks at intervals of time T. Further assuming that the total time of four steps of processing is time U, the processing time per one macroblock turns into time U in the sequential processing, and time T in the pipeline processing. Since it is obvious that U > T, the throughput of the macroblock processing improves by the pipeline processing.

However, in order to practice such a pipeline processing, a pipeline buffer is required between each processing. The pipeline buffer is an intermediate buffer for holding data at a break of the pipeline. Therefore, the adoption of the pipeline must be determined in consideration of a trade-off of performance and cost.

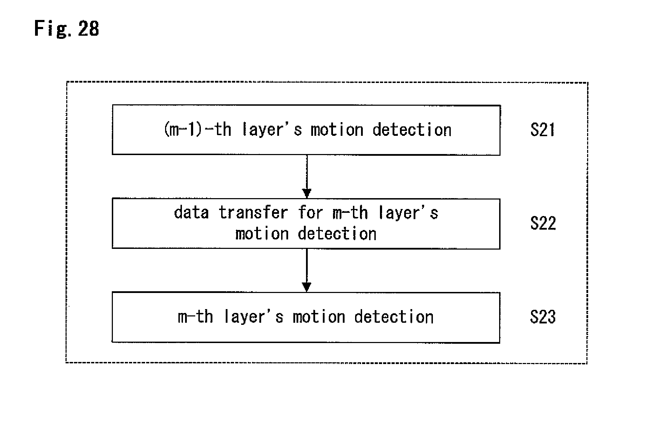

Fig. 28 is a flow chart of the motion detection. Fig. 28 shows the processing flow of a certain layer's motion detection in a multi-layered processing of the motion detection.

In Step S21, an (m-1)-th layer's motion detection is performed (m is a natural number equal to or greater than 2). When the (m-1)-th layer's motion detection in Step S21 is performed to the reference picture for which the pixel skipping has been practiced as shown in Fig. 24, the reference picture data for the next m-th layer's motion detection must be transferred in Step S22, based on the motion vector detected in the (m-1)-th layer. In Step S23, the m-th layer's motion detection is performed using the transferred reference picture data.

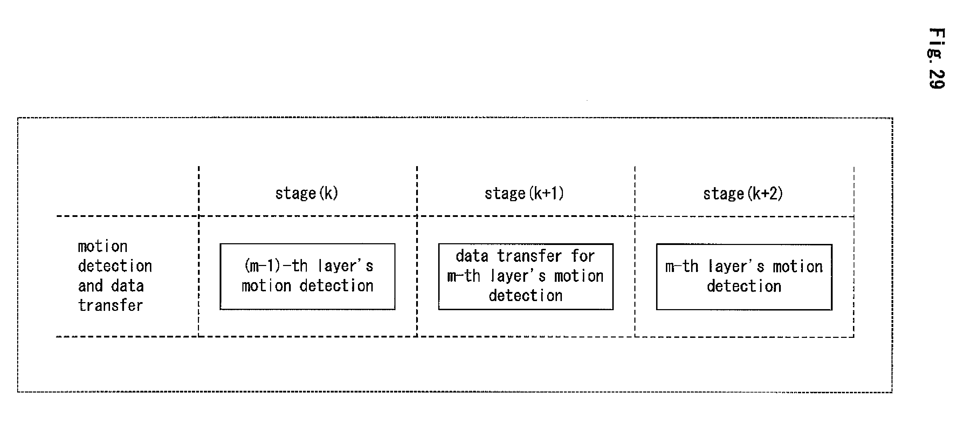

Fig. 29 is a structure drawing illustrating a pipeline of the motion detection, corresponding to the motion detection of Fig. 28. When a large range is searched in the motion detection, the transfer of the data in the search range takes time. Therefore, in the example of the pipeline structure shown in Fig. 29, a pipeline stage for the data transfer is provided in stage (k+1), thereby enhancing the throughput.

The above-explained technique by the conventional art can improve the throughput of processing of a motion picture by the pipeline processing. When the layers of the motion detection increase in number, on the other hand, there arises increase in the number of pipeline stages, in latency, and at the same time in the number of required pipeline buffers. These facts bring down disadvantages of the conventional art.

Disclosure of the Invention

In view of the above, an object of the present invention is to provide a motion detection device for motion picture encoding which is able to suppress occurrence of frame delay by reducing time delay in pipeline processing, and is furthermore able to decrease the number of pipeline buffers.

A first aspect of the present invention provides a motion detection device operable to hierarchically detect a motion vector using correlation between a reference picture and a picture to be encoded, the motion detection device comprising: a processor; a first storage means operable to store a first reference picture for use in detection of a first-stage motion vector; a first motion detection means operable to detect the first-stage motion vector using the first reference picture stored in the first storage means; a second storage means operable to store a second reference picture for use in detection of a second-stage motion vector, the detection of the second-stage motion vector being performed by using the first-stage motion vector detected by the first motion detection means; a second motion detection means operable to detect the second-stage motion vector using the second reference picture stored in the second storage means; a third storage means operable to store a third reference picture for use in detection of a third-stage motion vector, the detection of the third-stage motion vector being performed by using the second-stage motion vector detected by the second motion detection means; a third motion detection means operable to detect the third-stage motion vector using the third reference picture stored in the third storage means; a main storage means operable to store the reference picture and the picture to be encoded; and a data transfer control means operable to control data transfer between the main storage means and the first storage means, data transfer between the main storage means and the second storage means, and data transfer between the main storage means and the third storage means. When the first-stage motion vector is referenced to, the processor transfers data of the third reference picture from the main storage means to the third storage means, based on the detected first-stage motion vector, before the detection of the second-stage motion vector is brought to completion. When the first-stage motion vector is not referenced to, the processor transfers data of the third reference picture from the main storage means to the third storage means, before the detection of the first-stage motion vector is brought to completion.

According to the structure, when the motion vector detected in the first stage is referred to, the transfer of the reference picture for motion vector detection in the third stage and the execution of motion vector detection in the second stage are performed simultaneously, therefore, the motion vector detection of the third stage can be started without delay. When the motion vector detected in the first stage is not referred to, the motion vector detection in the third stage can be started without delay.

A second aspect of the present invention provides a motion detection device operable to hierarchically detect a motion vector using correlation between a reference picture and a picture to be encoded, the motion detection device comprising: a processor; a first storage means operable to store a first reference picture for use in detection of a first-stage motion vector; a first motion detection means operable to detect the first-stage motion vector using the first reference picture stored in the first storage means; a second storage means operable to store a second reference picture for use in detection of a second-stage motion vector, the detection of the second-stage motion vector being performed by using the first-stage motion vector detected by the first motion detection means; a second motion detection means operable to detect the second-stage motion vector using the second reference picture stored in the second storage means; a third storage means operable to store a third reference picture for use in motion compensation, which is performed by using the second-stage motion vector detected by the second motion detection means; a motion compensation means operable to perform the motion compensation using the third reference picture stored in the third storage means; a main storage means operable to store the reference picture and the picture to be encoded; and data transfer control means operable to control data transfer between the main storage means and the first storage means, data transfer between the main storage means and the second storage means, and data transfer between the main storage means and the third storage means. When the first-stage motion vector is referenced to, the processor transfers data of the third reference picture from the main storage means to the third storage means, based on the detected first-stage motion vector, before the detection of the second-stage motion vector is brought to completion. When the first-stage motion vector is not referenced to, the processor transfers data of the third reference picture from the main storage means to the third storage means, before the detection of the first-stage motion vector is brought to completion.

According to the structure, when the motion vector detected in the first stage is referred to, the transfer of the reference picture for motion compensation and the execution of the motion vector detection in the second stage are performed simultaneously. Therefore, the motion compensation can be started without delay. When the motion vector detected in the first stage is not referred to, the motion compensation of the third stage can be started without delay.

A third aspect of the present invention provides a motion detection device operable to hierarchically detect a motion vector using correlation between a reference picture and a picture to be encoded, the motion detection device comprising: a processor; a first storage means operable to store a first reference picture for use in detection of a first-stage motion vector; a first motion detection means operable to detect the first-stage motion vector using the first reference picture stored in the first storage means; a second storage means operable to store a second reference picture for use in detection of a second-stage motion vector, the detection of the second-stage motion vector being performed by using the first-stage motion vector detected by the first motion detection means; a second motion detection means operable to detect the second-stage motion vector using the second reference picture stored in the second storage means; a main storage means operable to store the reference picture and the picture to be encoded; and a data transfer control means operable to control data transfer between the main storage means and the first storage means and data transfer between the main storage means and the second storage means. The processor transfers data of the second reference picture from the main storage means to the second storage means, before the detection of the first-stage motion vector is brought to completion.

According to the structure, the transfer of the reference picture for motion vector detection in the second stage and the execution of motion vector detection in the first stage are performed simultaneously. Therefore, the motion vector detection in the second stage can be started without delay.

A fourth aspect of the present invention provides a motion detection device operable to detect a motion vector using correlation between a reference picture and a picture to be encoded, the motion detection device comprising: a processor; a first storage means operable to store a first reference picture for use in detection of a first-stage motion vector; a first motion detection means operable to detect the first-stage motion vector using the first reference picture stored in the first storage means; a second storage means operable to store a second reference picture for use in motion compensation, which is performed by using the first-stage motion vector detected by the first motion detection means; a motion compensation means operable to perform the motion compensation using the second reference picture stored in the second storage means; a main storage means operable to store the reference picture and the picture to be encoded; and a data transfer control means operable to control data transfer between the main storage means and the first storage means and data transfer between the main storage means and the second storage means. The processor transfers data of the second reference picture from the main storage means to the second storage means, before the detection of the first-stage motion vector is brought to completion.

According to the structure, the transfer of the reference picture for motion compensation and the execution of motion vector detection in the first stage are performed simultaneously. Therefore, the motion compensation can be started without delay.

A fifth aspect of the present invention provides the motion detection device, wherein the first motion detection means detects a full-pel-precision motion vector.

A sixth aspect of the present invention provides the motion detection device, wherein the second motion detection means detects a half-pel-precision motion vector.

A seventh aspect of the present invention provides the motion detection device, wherein the third motion detection means detects a quarter-pel-precision motion vector.

According to these structures, it is possible to practice, step by step, from the motion vector detection with a full-pel precision up to the motion vector detection with a quarter-pel precision. Furthermore, a motion detection device which performs the motion vector detection up to the full-pel precision, a motion detection device which performs the motion vector detection up to the half-pel precision, or a motion detection device which performs the motion vector detection up to the quarter-pel precision can be optionally constituted according to the application purpose.

An eighth aspect of the present invention provides the motion detection device, wherein the motion compensation means performs motion compensation of a luminance picture.

According to the structure, it is possible to realize a motion detection device which performs motion compensation to the luminance data.

A ninth aspect of the present invention provides the motion detection device, wherein the motion compensation means performs motion compensation of a chrominance picture.

According to the structure, it is possible to realize a motion detection device which performs the motion compensation to the chrominance data.

A tenth aspect of the present invention provides the motion detection device, wherein the first storage means and the second storage means are implemented with memories, and wherein the first storage means is greater than the second storage means in memory size.

According to the structure, the first motion detection means which uses the first storage means can search for a motion vector over the larger range than the second motion detection means which uses the second storage means.

An eleventh aspect of the present invention provides the motion detection device, wherein the second storage means and the third storage means are implemented with memories, and wherein the second storage means is greater than the third storage means in memory size.

According to the structure, the second motion detection means which uses the second storage means can search for a motion vector over the larger range than the third motion detection means which uses the third storage means.

A twelfth aspect of the present invention provides the motion detection device, wherein the second storage means is accessed by either of the data transfer control means and the second motion detection means.

A thirteenth aspect of the present invention provides the motion detection device, wherein the third storage means is accessed by either of the data transfer control means and the third motion detection means.

A fourteenth aspect of the present invention provides the motion detection device, wherein the third storage means is accessed by either of the data transfer control means and the motion compensation means.

According to these structures, the data transfer and the motion detection can be practiced without providing a pipeline buffer.

A fifteenth aspect of the present invention provides the motion detection device, wherein data of the reference picture in a region required on the basis of the motion vector detected by the first motion detection means, is transferred from the second storage means to the third storage means.

According to the structure, the data transfer from the main storage means to the third storage means can be omitted.

A sixteenth aspect of the present invention provides the motion detection device, wherein data of the reference picture in a region required on the basis of the motion vector detected by the first motion detection means is transferred from the first storage means to the second storage means.

According to the structure, the data transfer from the main storage means to the second storage means can be omitted.

Brief Description of the Drawings

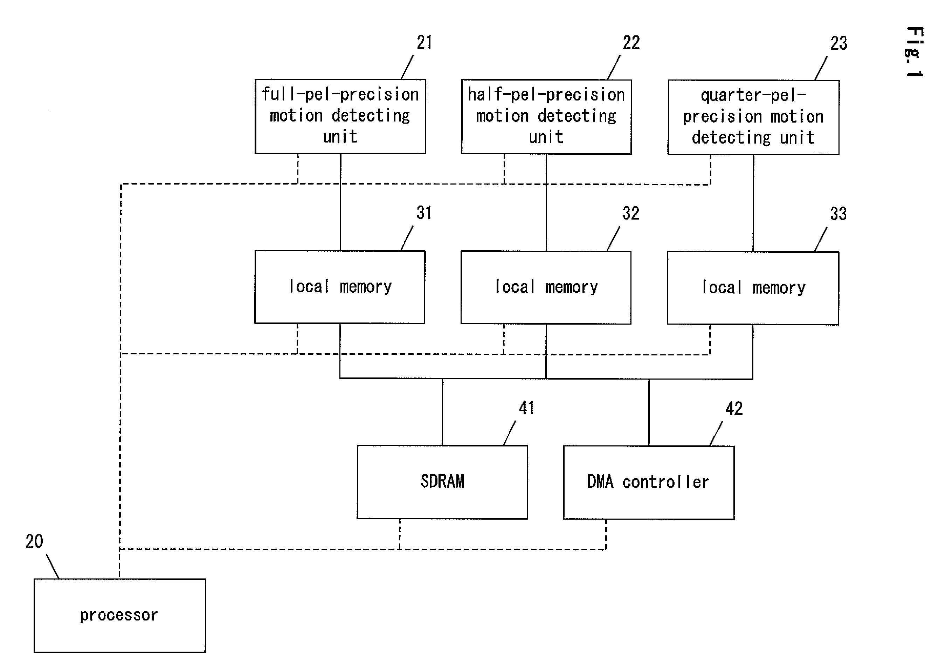

Fig. 1 is a block diagram illustrating a motion detection device in Embodiment 1 of the present invention;

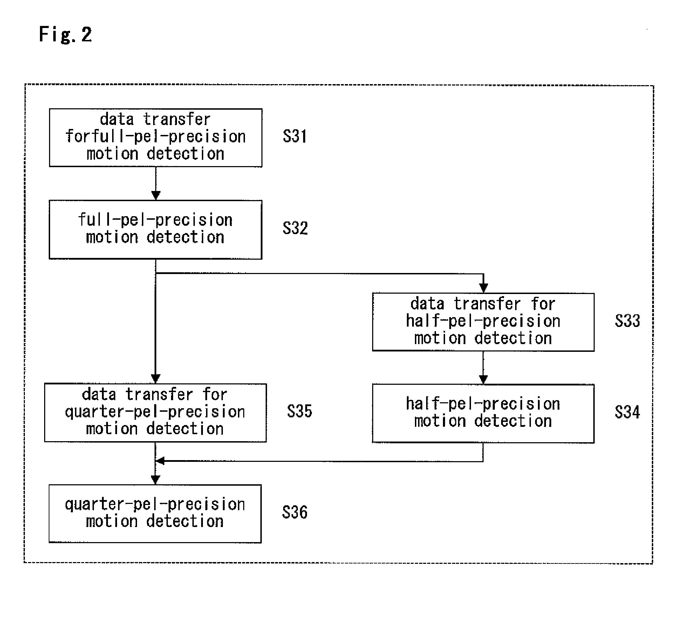

Fig. 2 is a flow chart for the motion detection device in Embodiment 1 of the present invention;

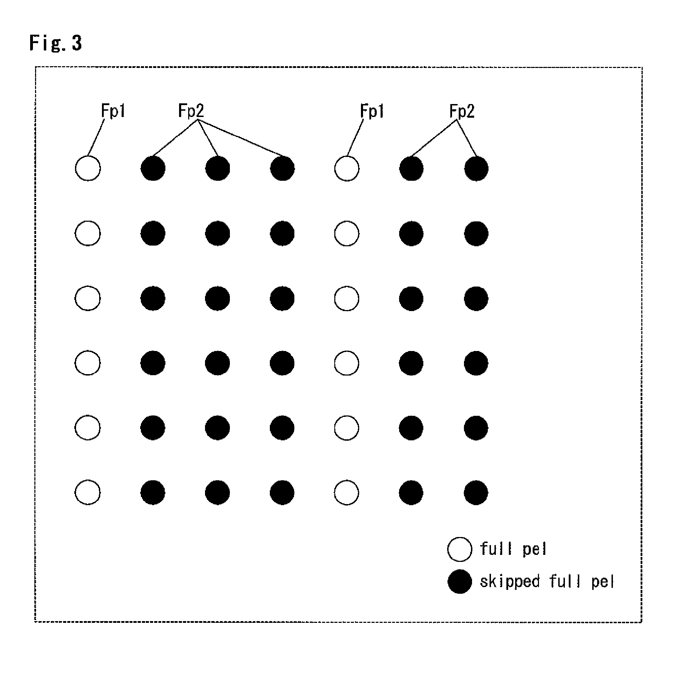

Fig. 3 is a location diagram illustrating integer pixels, skipped to one fourth, of the reference picture in Embodiment 1 of the present invention;

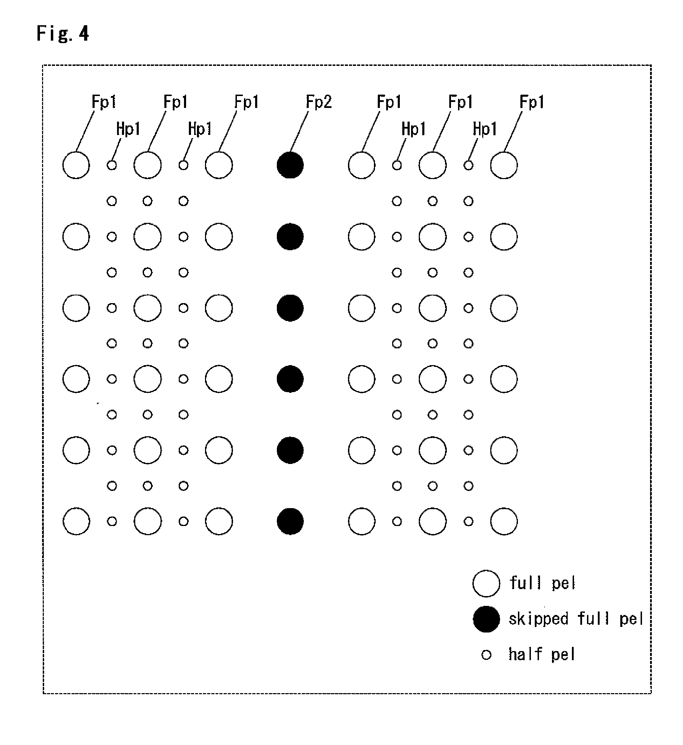

Fig. 4 is a location diagram illustrating half pels, skipped to one fourth, of the reference picture in Embodiment 1 of the present invention;

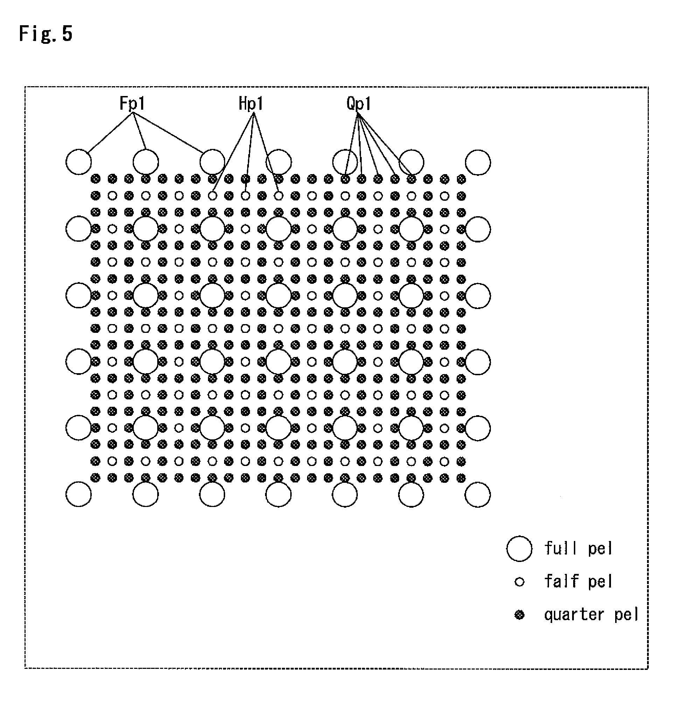

Fig. 5 is a location diagram illustrating quarter pels of the reference picture in Embodiment 1 of the present invention;

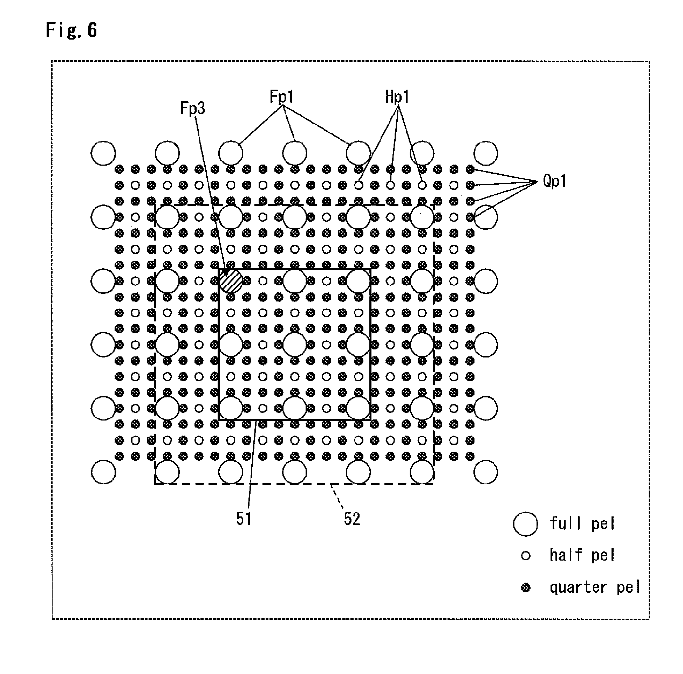

Fig. 6 is an explanatory drawing illustrating the transfer region of the reference picture in Embodiment 1 of the present invention;

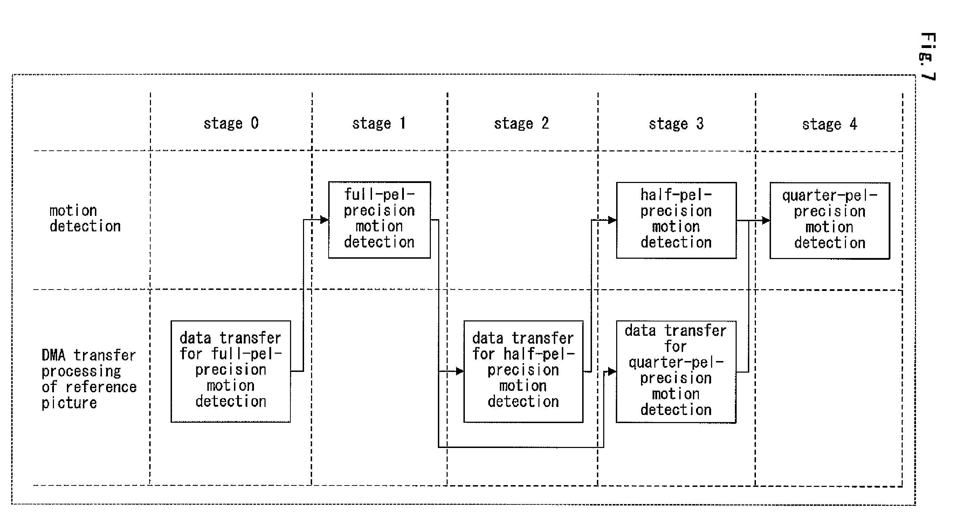

Fig. 7 is a structure drawing illustrating a pipeline of the motion detection device in Embodiment 1 of the present invention;

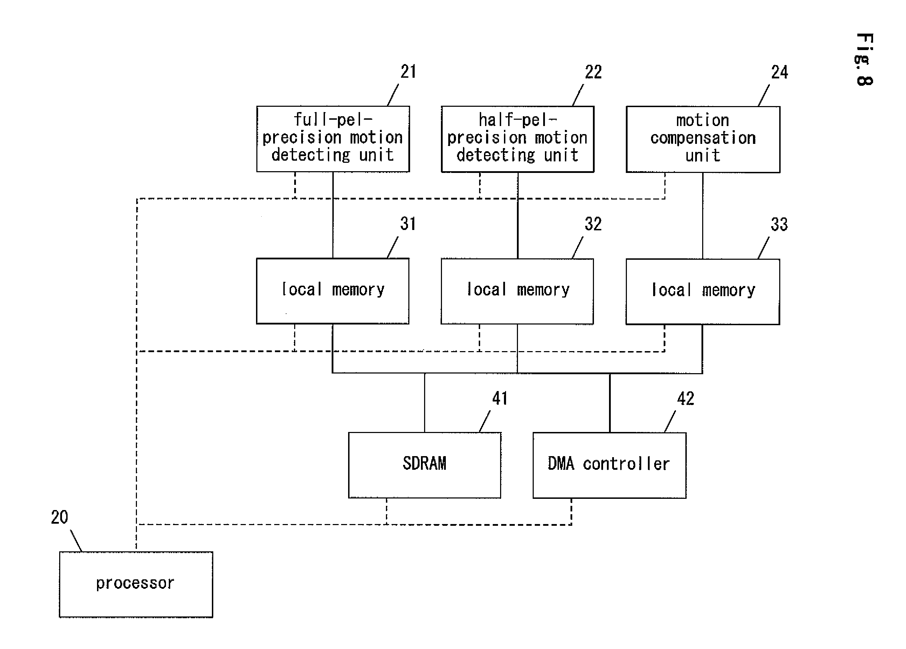

Fig. 8 is a block diagram illustrating a motion detection device in Embodiment 2 of the present invention;

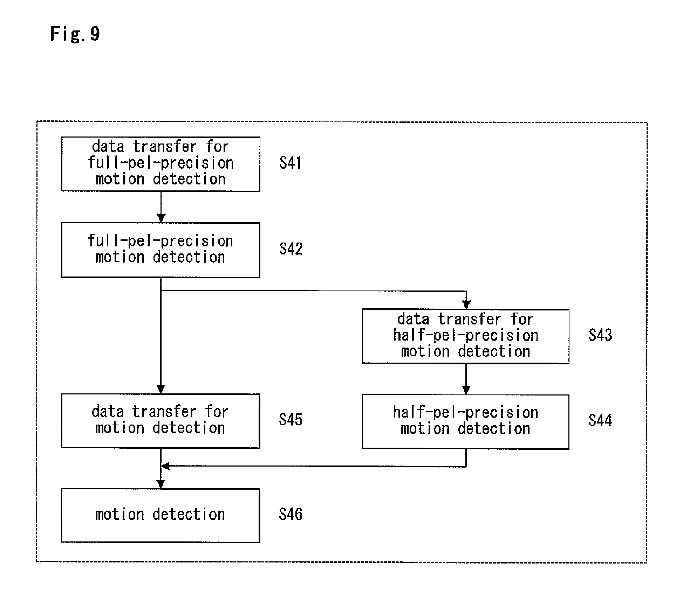

Fig. 9 is a flow chart for the motion detection device in Embodiment 2 of the present invention;

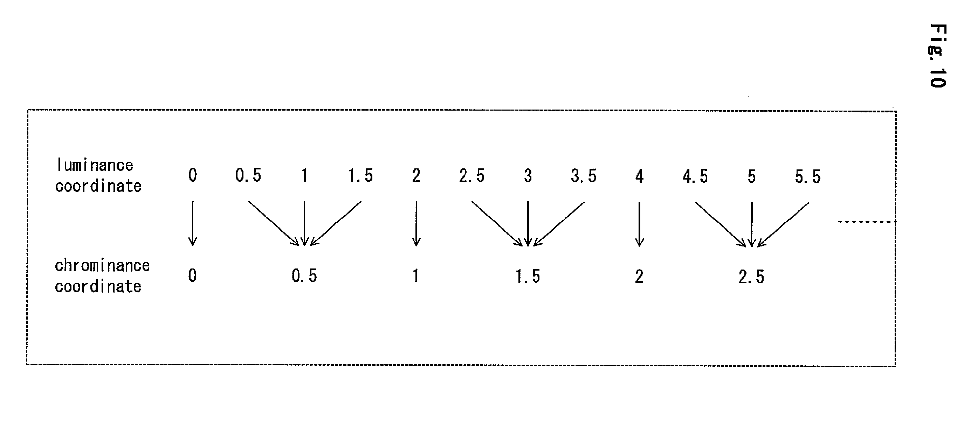

Fig. 10 is a conversion table of luminance coordinates and chrominance coordinates in Embodiment 2 of the present invention;

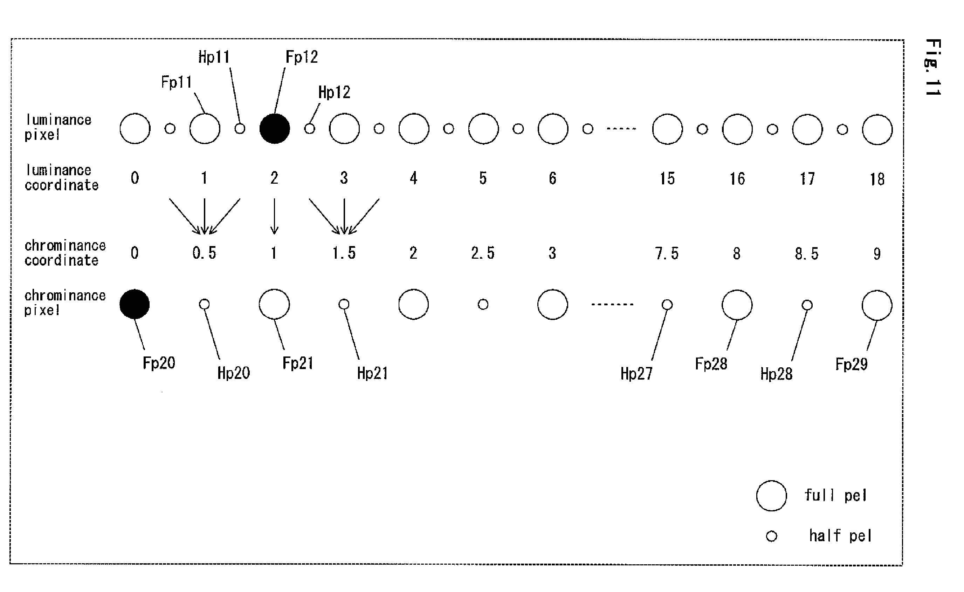

Fig. 11 is an explanatory drawing illustrating a transfer region of chrominance data in Embodiment 2 of the present invention;

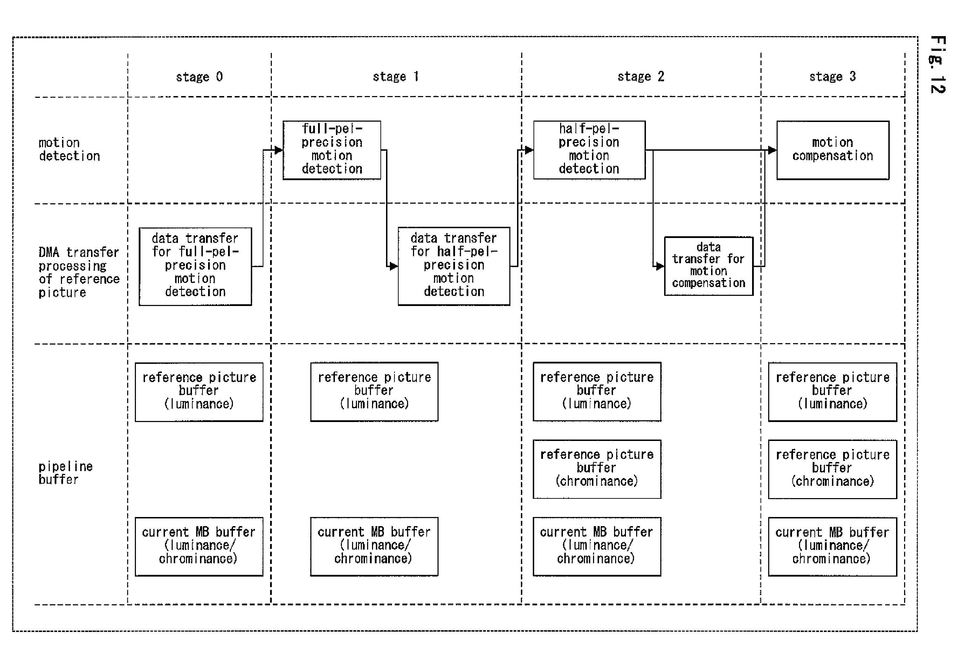

Fig. 12 is a structure drawing illustrating a pipeline of a motion detection device according to the conventional art;

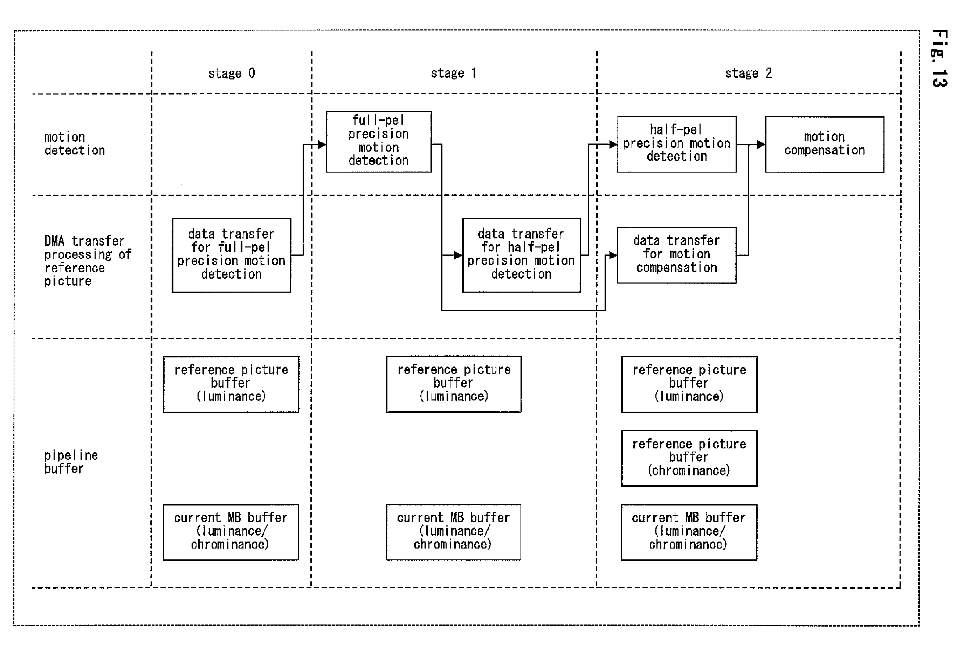

Fig. 13 is a structure drawing illustrating a pipeline of the motion detection device in Embodiment 2 of the present invention;

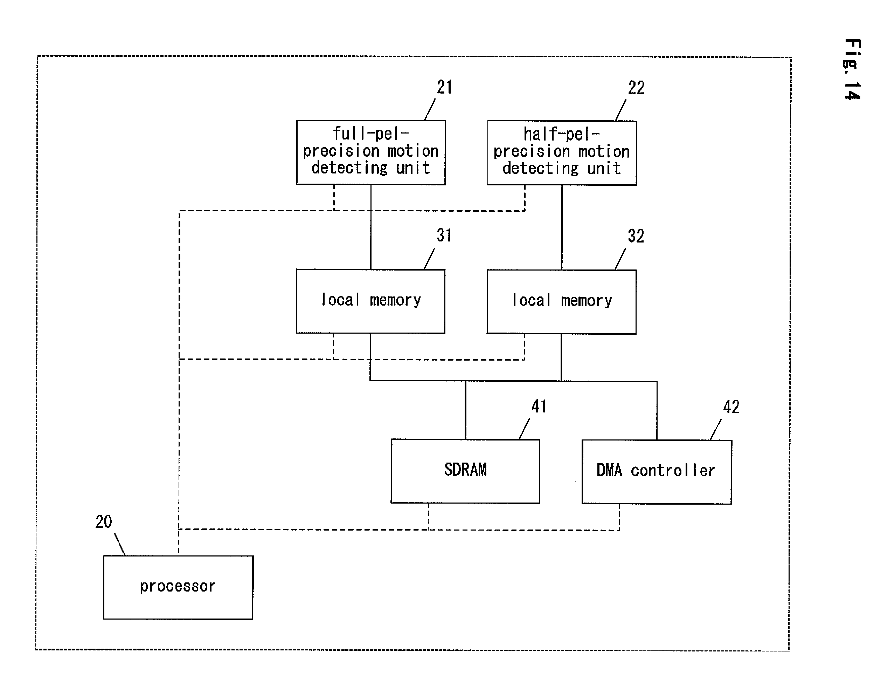

Fig. 14 is a block diagram illustrating a motion detection device in Embodiment 3 of the present invention;

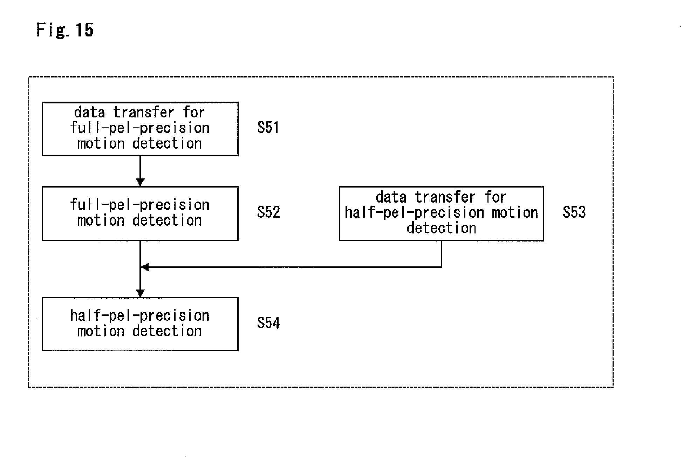

Fig. 15 is a flow chart for the motion detection device in Embodiment 3 of the present invention;

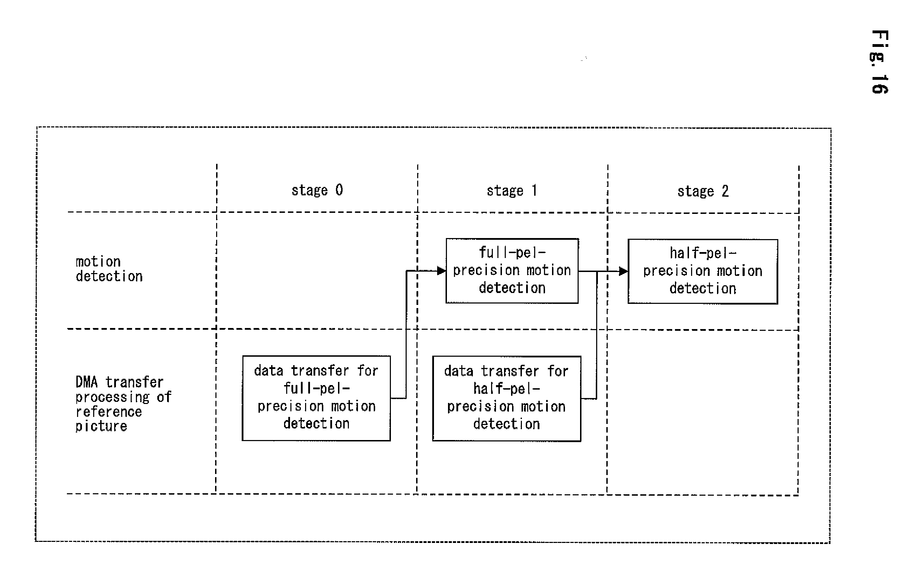

Fig. 16 is a structure drawing illustrating a pipeline of the motion detection device in Embodiment 3 of the present invention;

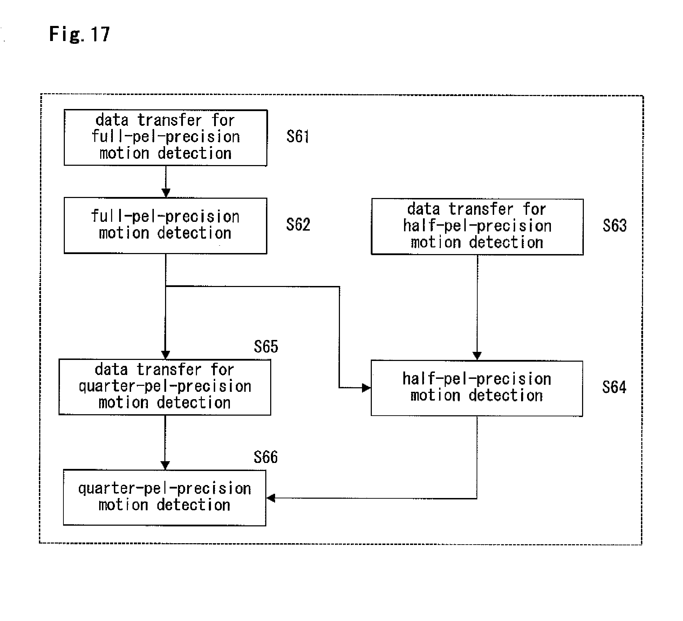

Fig. 17 is a flow chart for a motion detection device in Embodiment 4 of the present invention;

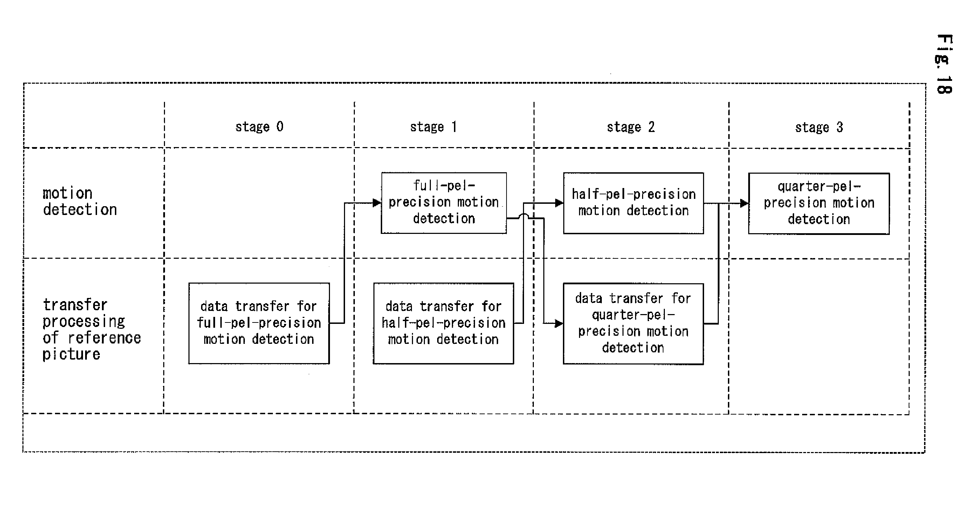

Fig. 18 is a structure drawing illustrating a pipeline of the motion detection device in Embodiment 4 of the present invention;

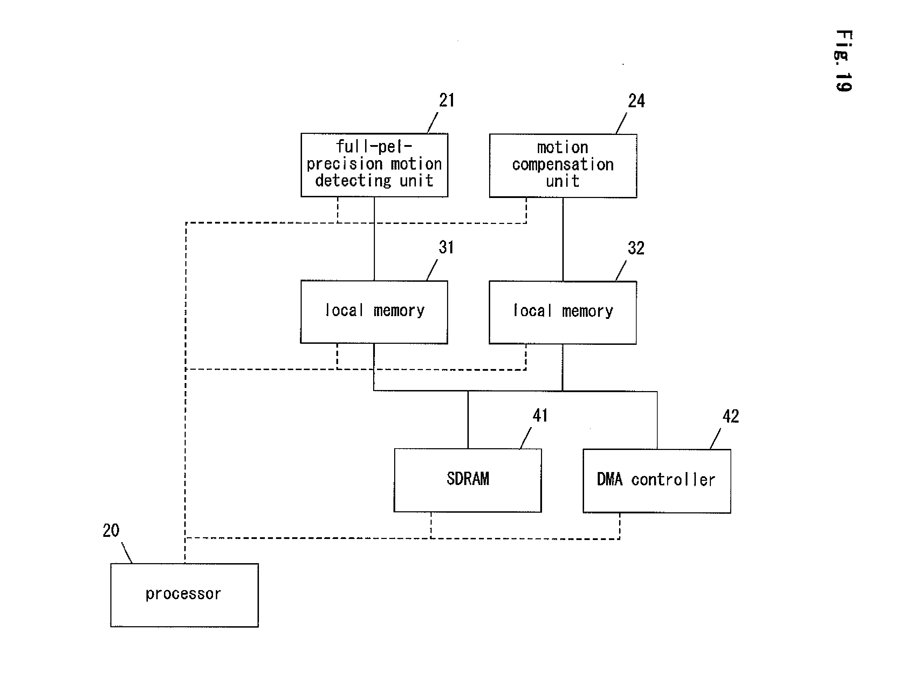

Fig. 19 is a block diagram illustrating a motion detection device in Embodiment 5 of the present invention;

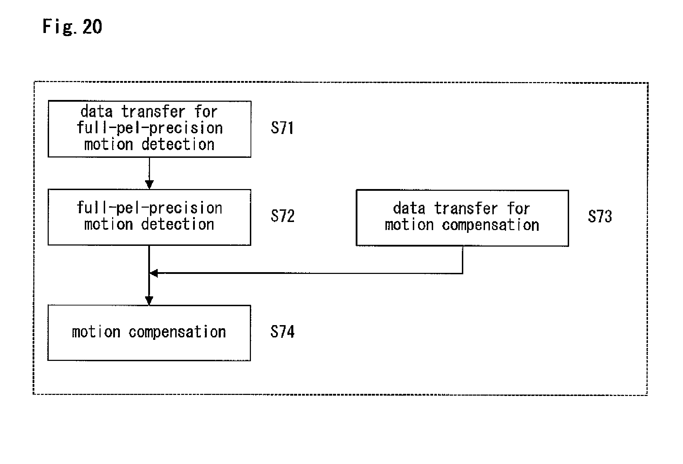

Fig. 20 is a flow chart for the motion detection device in Embodiment 5 of the present invention;

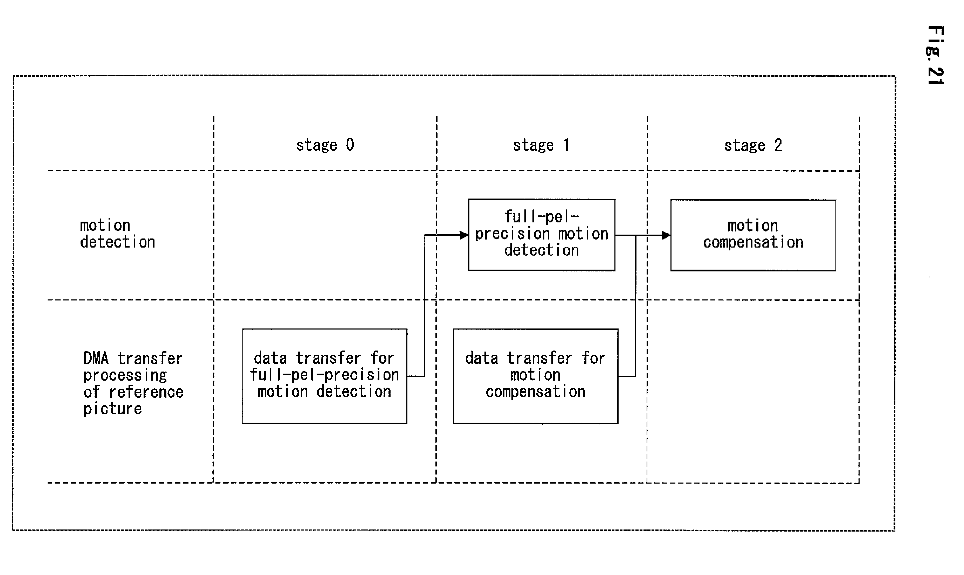

Fig. 21 is a structure drawing illustrating a pipeline of a motion detection device in Embodiment 5 of the present invention;
Fig. 22 is a block diagram illustrating the conventional general motion detection section;
Fig. 23 is a flow chart for the conventional general motion detection section;
Fig. 24 is an exemplification diagram of integer pixels skipped for every two pixels;
Fig. 25 is an exemplification diagram of half pels generated around an integer pixel B;
Fig. 26 is a flow chart for motion picture encoding;
Fig. 27 is an exemplification diagram of pipeline processing of the motion picture encoding;
Fig. 28 is a flow chart for motion detection; and

Fig. 29 is a structure drawing illustrating a pipeline of the motion detection.

Best Mode for Carrying out the Invention

Hereinafter, a description is given of embodiments of the invention with reference to the accompanying drawings.

Embodiment 1

Fig. 1 is a block diagram illustrating a motion detection device in Embodiment 1 of the present invention.

As illustrated in Fig. 1, the motion detection device of the present embodiment comprises a full-pel-precision motion detecting unit 21, a half-pel-precision motion detecting unit 22, a quarter-pel-precision motion detecting unit 23, local memories 31, 32, and 33, an SDRAM 41, a DMA controller 42, and a processor 20.

The full-pel-precision motion detecting unit 21 corresponds to the first motion detection means, the half-pel-precision motion detecting unit 22 corresponds to the second motion detection means, and the quarter-pel-precision motion detecting unit 23 corresponds to the third motion detection means.

The local memory 31 corresponds to the first storage means, and stores the reference picture data and the picture data of a macroblock for encoding, both of which are used by the full-pel-precision motion detecting unit 21. The local memory 32 corresponds to the second storage means, and stores the reference picture data and the picture data of a macroblock for encoding, both of which are used by the half-pel-precision motion detecting unit 22. The local memory 33 corresponds to the third storage means, and stores the reference picture data and the picture data of a macroblock for encoding, both of which are used by the quarter-pel-precision motion detecting unit 23. The SDRAM 41 corresponds to the main storage means, and stores the picture data of the current frame and the reference frame.

The DMA controller 42 corresponds to the data transfer control means, and controls the data transfer between the SDRAM 41 and the local memories 31, 32, and 33. The processor 20 controls the whole processing of the motion detection device. In Fig. 1, the solid lines are data lines and the dotted lines are control lines.

Fig. 2 is a flow chart for the motion detection device in Embodiment 1 of the present invention. According to Fig. 2 and with concurrent reference to Fig. 1, operation of the motion detection device of the present embodiment is explained.

In Step S31, the reference picture data to be used for full-pel-precision motion detection and the picture data of a macroblock for encoding are transferred to the local memory 31 from the SDRAM 41 under control of the DMA controller 42.

In Step S32, the full-pel-precision motion detecting unit 21 performs the full-pel-precision motion detection, using the reference picture data and the picture data of the macroblock for encoding, both of which have been transferred to the local memory 31. The full-pel-precision motion detection is performed according to the block matching method.

The following describes an example in which the full-pel-precision motion detection of the present embodiment is practiced for a reference picture that is skipped to one fourth in the horizontal direction.

Fig. 3 is a location diagram illustrating full pels (or integer pixels), skipped to one fourth, of the reference picture in Embodiment 1 of the present invention. In the figure, the pixel Fp 1 of a white circle represents a full pel which is not skipped, and the pixel Fp2 of a black circle represents a skipped full pel. In this example, the reference picture is horizontally skipped to one fourth. Since effective data exists by one for every four pixels in the horizontal direction, the horizontal motion-detection precision decreases to one fourth.

Many methods of the full-pel-precision motion detection are proposed. The typical examples are such as an all search method, a gradient method, a diamond search method, and a One-at-a-Time method, etc. Any method may be used in the present invention. The sum of absolute difference and sum of squared difference, etc. of the conventional art can be employed as the evaluation function of the full-pel-precision motion detection.

Referring to Fig. 2 again, in Step S33, the reference picture data and the picture data of the macroblock for encoding, which are used for the half-pel-precision motion detection, are transferred from the SDRAM 41 to the local memory 32 by the instruction of the processor 20.

In Step S34, the half-pel-precision motion detecting unit 22 performs the half-pel-precision motion detection in the circumference of the motion vector detected by the full-pe1-precision motion detection. In the present embodiment, the half-pel-precision motion detection is performed to eight half pels around the motion vector detected by the iull-pel-precision motion detection.

The following describes an example in which the half-pel-precision motion detection of the present embodiment is practiced for the reference picture that is skipped to one fourth in the horizontal direction.

Fig. 4 is a location diagram illustrating half pels, skipped to one fourth, of the reference picture in Embodiment 1 of the present invention. In Fig. 4, the pixel Fp1 of a white circle represents a full pel which is not skipped, and the pixel Fp2 of a black circle represents a skipped full pel. The pixel Hp1 of a small white circle represents a half pel computed from the full pels Fp1 which are not skipped.

The half pel is computed by the average of integer pixel (full pel) values, as mentioned above. Focusing on a certain search position in Fig. 4, the half pels are found to be effective at every four pixel units in the horizontal direction. Even in processing for pixels which are similarly skipped to one fourth, it is clear that the half-pel-precision motion detection needs more pieces of reference picture data, as compared with the full-pel-precision motion detection.

Referring to Fig. 2 again, in Step 535, the reference picture data and the picture data of a macroblock for encoding, which are used for the quarter-pel-precision motion detection, are transferred from the SDRAM 41 to the local memory 33 by the instruction of the processor 20.

In Step S36, the quarter-pel-precision motion detecting unit 23 performs the quarter-pel-precision motion detection in the circumference of the motion vector detected by the half-pel-precision motion detection.

In the quarter-pel-precision motion detection, which is the last layer of the motion detection, the pixel skipping is not performed in order to improve the precision of the motion detection.

Fig. 5 is a location diagram illustrating quarter pels of the reference picture in Embodiment 1 of the present invention. In Fig. 5, the pixel Fp1 of a large white circle represents a full pel, the pixel Hp1 of a small white circle represents a half pel, and the pixel Qp1 of a small black circle represents a quarter pel. The symbols of the pixel Fp1, the pixel Hp 1 and the pixel Qp1 are attached to some representative pixels, but not to all pixels.

The quarter pel is computed as the average of the half pels, as in the case where the half pel is computed from the full pels. As clearly seen from Fig. 5 which illustrates the location of the quarter pels, the location of the half pels for computing the quarter pels, and the location of the full pels for computing the half pels, the full pels cannot be skipped in the quarter-pel-precision motion detection. Therefore, when the half-pel-precision motion detection from the half pels with skipping is completed, it is necessary to transfer the reference picture data without skipping for use in the quarter-pel-precision motion detection.

By the way, as mentioned above, if the quarter-pel-precision motion detection is performed after waiting for the completion of the transfer of the reference picture data for use in the quarter-pel-precision motion detection, the start of the quarter-pel-precision motion detection will be delayed, and latency will increase. Accordingly, at Step S35 illustrated in Fig. 2, when the full-pel-precision motion detection is completed, the reference picture data for the quarter-pel-precision motion detection is transferred so that the search range in the half-pel-precision motion detection may be included.

Fig. 6 is an explanatory drawing illustrating a transfer region of the reference picture in Embodiment 1 of the present invention. In Fig. 6, the symbols attached to the pixels are the same as those in Fig. 5, and the pertaining explanation is omitted.

In the example illustrated in Fig. 6, it is assumed that a macroblock to be encoded is composed of 3 pixels × 3 pixels. (In practice, a macroblock to be encoded is composed of 16 pixels × 16 pixels.) The frame 51 defined by the solid line is the macroblock which has been matched in the full-pel-precision motion detection, and the position of the full-pel-precision motion vector MV-INT is given by the coordinates of the pixel Fp3 at the upper left of the frame 51. The frame 52 defined by the dotted line illustrates the range of the reference picture which should be transferred for the quarter-pel-precision motion detection. Namely, the frame 52 illustrates the range of pixels which includes surely full pels necessary for generating quarter pels to be used for the following quarter-pel-precision motion detection. In other words, the frame 52 illustrates the pixel range which includes surely full pels necessary for generating quarter pels used in the following quarter-pel-precision motion detection, even when the half-pel-precision motion vector MV-HALF, detected in the half-pel-precision motion detection, gets settled in any of eight half pels around the position of motion vector MV-INT illustrated by the pixel Fp3.

In this way, if the range of reference picture data to be transferred for the quarter-pel-precision motion detection is set as the pixel range illustrated by the frame 52, the reference picture data for the quarter-pel-precision motion detection can be transferred from the SDRAM 41 to the local memory 33 of Fig. 1, in the phase after determining the motion vector MV-INT in the full-pel-precision motion detection. Consequently, the reference picture data for the quarter-pel-precision motion detection can be transferred, without waiting for the result of the half-pel-precision motion detection. Therefore, the waiting time for the data required in the quarter-pel-precision motion detection is reduced, and the latency of the macroblock processing improves.

Fig. 7 is a structure drawing illustrating a pipeline of the motion detection device in Embodiment 1 of the present invention. Fig. 7 indicates that the pipeline of processing of the motion detection device of the present embodiment is composed of from stage-0 to stage-4, dividing the processing into the motion detection processing and the DMA transfer processing of the reference picture. As mentioned above, in the motion detection device of the present embodiment, the transfer of the reference picture data for the quarter-pel-precision motion detection can be performed at the same time as the half-pel-precision motion detection in stage-3; consequently, the number of the pipeline stages can be diminished by one.

As explained above, according to the motion detection device of the present embodiment, the number of the pipeline stages can be diminished by one, and the motion detection processing can be performed at high speed that much; thereby, the time delay in the pipeline processing is reduced and the occurrence of frame delay can be suppressed.

Embodiment 2

Fig. 8 is a block diagram illustrating a motion detection device in Embodiment 2 of the present invention. In Fig. 8, the same components as those in Fig. 1 are attached with the same reference symbols or numerals and the descriptions thereof are omitted.

As illustrated in Fig. 8, the motion detection device of the present embodiment comprises a full-pel-precision motion detecting unit 21, a half-pel-precision motion detecting unit 22, a motion compensation unit 24, local memories 31, 32, and 33, an SDRAM 41, a DMA controller 42, and a processor 20.

The local memory 31 corresponds to the first storage means, and stores the reference picture data and the picture data of a macroblock for encoding, both of which are used by the full-pel-precision motion detecting unit 21. The local memory 32 corresponds to the second storage means, and stores the reference picture data and the picture data of a macroblock for encoding, both of which are used by the half-pel-precision motion detecting unit 22. The local memory 33 corresponds to the third storage means, and stores the reference picture data and the picture data of a macroblock for encoding, both of which are used by the motion compensation unit 24. The SDRAM 41 corresponds to the main storage means, and stores the picture data of the current frame and the reference frame.

The DMA controller 42 corresponds to the data transfer control means, and controls the data transfer between the SDRAM 41 and the local memories 31, 32, and 33. The processor 20 controls the whole processing of the motion detection device. In Fig. 8, the solid lines are data lines and the dotted lines are control lines.

In the motion detection device of the present embodiment, the motion detection is performed in two layers of the full-pel precision and the half-pel precision, and the quarter-pel-precision motion detection is not performed. No pixel skipping for the reference picture is performed in the half-pel-precision motion detection. The motion compensation is performed after the half-pel-precision motion detection.

Fig. 9 is a flow chart for the motion detection device in Embodiment 2 of the present invention.

According to Fig. 9 and with concurrent reference to Fig. 8, operation of the motion detection device of the present embodiment is explained.

In Step S41, the transfer of the reference picture data and the macroblock picture data for encoding, both of which are used for the full-pel-precision motion detection, is the same as the corresponding processing in Step S31 of the flow chart of the motion detection device in Embodiment 1 of the present invention, shown in Fig. 2; the full-pel-precision motion detection in Step S42 is the same as the corresponding processing in Step S32; the transfer of the reference picture data and the macroblock picture data for encoding in Step S43, both of which are used for the half-pel-precision motion detection, is the same as the corresponding processing in Step S33; and the half-pel-precision motion detection in Step S44 is the same as the corresponding processing in Step S34. Therefore, the pertaining explanations are omitted.

When the half-pel-precision motion detection is completed in Step S44, the motion compensation is performed next. The motion compensation is performed for the reference picture of the luminance component, and the reference picture of the chroma component. However, in this phase, the reference picture data of the chroma component has not yet been transferred to the local memory 33. Since the reference picture data region of the chroma component cab be specified only after the motion vector of the luminance component is determined, it has been necessary, in the conventional art, to transfer the reference picture data of the chroma component after the half-pel-precision motion detection is completed.

Accordingly, in the phase after determining the full-pel-precision motion vector, the motion detection device of the present embodiment starts, in Step S45, the transfer of the reference picture data of the chroma component so that the search range of the half-pel-precision motion detection may be included. Namely, like the transfer of the reference picture data for the quarter-pel-precision motion detection in Step S35 of Fig. 2 in Embodiment 1, the required reference picture data region of the chroma component is defined so that any search result of the half-pel-precision motion detection can be met. The reference picture data of the chroma component in the region is transferred from the SDRAM 41 to the local memory 33, shown in Fig. 8, immediately after the determination of the motion vector in the full-pel-precision motion detection.

In Step S46, according to the result of the half-pel-precision motion detection in Step S44, the reference picture data of the luminance component and the reference picture data of the chroma component, both of which are stored in the local memory 33, are read to perform the motion compensation.

The detailed transfer method of the reference picture data of the chroma component in Step S45 mentioned above is explained further.

Fig. 10 is a conversion table of luminance and chrominance coordinates in Embodiment 2 of the present invention. This conversion table is equally applicable to the coordinates in the horizontal direction and the vertical direction.

Since the chroma-component reference picture data (it is hereafter called the chrominance data) is, in amount, equal to one-half of the luminance-component reference picture data (it is hereafter called the luminance data) in the horizontal direction and in the vertical direction, one piece of chrominance data corresponds to two pieces of luminance data in each direction. (In the entire picture, one piece of chrominance data corresponds to four pieces of luminance data.) Namely, as illustrated in Fig. 10, the relationship is made in such a manner that the luminance coordinate of a value "0" corresponds to the chrominance coordinate of a value "0"; the luminance coordinates of values "0.5", "1", and "1.5" correspond to the chrominance coordinate of a value "0.5"; and the luminance coordinate of a value "2" corresponds to the chrominance coordinate of a value "1". According to the present coordinate conversion rule, the xy coordinates (1.5, 2.5) of the luminance data corresponds to the xy coordinates (0.5, 1.5) of the chrominance data, for example.

In motion compensation, the chrominance data to be generated in correspondence with the 16-pixel × 16-pixel luminance data of a macroblock to be encoded are of 8 pixels × 8 pixels. Fig. 11 is an explanatory drawing illustrating a transfer region of chrominance data in Embodiment 2 of the present invention. For ease of explanation, Fig. 11 illustrates the example in which coordinate conversion in the horizontal direction is performed from the coordinate of the luminance data to the coordinate of the chrominance data.

Now, as for luminance data, assume that the position of full-pel-precision motion vector MV-INT has been determined as the full pel Fp12 of a black circle, as a result of the full-pel-precision motion detection. In the next layer's half-pel-precision motion detection, a possible position on the coordinate that the half-pel-precision motion vector is detected is a half pel Hp 11 on the left of the full pel Fp 12, a half pel Hp12 on the right, or the full-pel Fp12 itself. For example, assuming that the x coordinate of the full pel Fp12 is "2", it is found that the x coordinates of the pixels Hp11, Fp12, and Hp12 that the half-pel-precision motion vector may be detected are "1.5", "2", and "2.5", respectively.

The pixels of the chrominance data corresponding to the pixels of luminance data possessing the above coordinates are found to be a half pel Hp20 of the coordinate "0.5", a full pel Fp21 of the coordinate "1", and a half pel Hp21 of the coordinate "1.5", according to the coordinate conversion rule of Fig. 10. That is, the coordinate of the pixel which may be generated per one line-8 pixels of the chrominance data is one of the following three cases.

    (1) 0.5, 1.5, 2.5, 3.5, 4.5, 5.5, 6.5, 7.5
    (2) 1.0, 2.0, 3.0, 4.0, 5.0, 6.0, 7.0, 8.0
    (3) 1.5, 2.5, 3.5, 4.5, 5.5, 6.5, 7.5, 8.5

In order to generate the chrominance data of case (1) including from a half pel Hp20 of the coordinate "0.5" to a half pel Hp27 of the coordinate "7.5", it is necessary to transfer full pels ranging from a full pel Fp20 of the coordinate "0" to a full pel Fp28 of the coordinate "8.0", from the SDRAM 41 to the local memory 33.

In order to generate the chrominance data of case (3) including from a half pel Hp21 of the coordinate "1.5" to a half pel Hp28 of the coordinate "8.5", it is necessary to transfer full pels ranging from a full pel Fp21 of the coordinate "1.0" to a full pel Fp29 of the coordinate "9.0", from the SDRAM 41 to the local memory 33.

From the above argument, it is readily found that the full pels ranging from the full pel Fp20 of the coordinate "0" to the full pel Fp29 of the coordinate "9.0" should be transferred from the SDRAM 41 to the local memory 33, in order to make it possible to generate all the chrominance data of cases (1), (2), and (3). By this assessment, it is possible to transfer the chrominance reference picture data before the half-pel-precision motion detection is completed.

In this way, according to the motion detection device of the present embodiment, the reference picture data for motion compensation can be transferred, without waiting for the result of the half-pel-precision motion detection. Therefore, the waiting time for acquiring the reference picture data required for the motion compensation is reduced, and the latency of the macroblock processing improves.

In order to clarify more the effect of reduction of the required number of pipeline stages and number of pipeline buffers in the motion detection device of the present embodiment, the comparison with the conventional art is now presented.

Fig. 12 is a structure drawing illustrating a pipeline of a motion detection device according to the conventional art. The figure also illustrates the required pipeline buffers in each stage.

As illustrated in Fig. 12, in stage-0, a reference picture buffer (luminance) is required for holding the luminance data of the reference picture transferred currently. This is because the data transfer and processing in different macroblock generations are performed at the same time in stage-0 and stage-1. For example, while the full-pel-precision motion detection of the n-th macroblock is practiced in stage-1, the reference picture data for the full-pel-precision motion detection of the (n+1)-th macroblock is transferred in stage-0 in parallel. Under the present circumstances, in order not to destroy the memory area which is referred to in the full-pel-precision motion detection for the n-th macroblock, it is necessary to provide a buffer separately for the data transfer in stage-0. Furthermore, in order to concurrently transfer in stage-0 the macroblock data (luminance data and chrominance data) of the current picture which is to be used for the full-pel-precision motion detection of stage-1, a current macroblock buffer (luminance and chrominance) is required.

In the motion detection device according to the conventional art, the data for motion compensation is transferred after the half-pel-precision motion detection of stage-2 is completed. Therefore, it is necessary to perform the motion compensation in stage-3 which follows stage-2 separately. This is because it is difficult, from a viewpoint of performance, to practice the half-pel-precision motion detection and the motion compensation in the same stage. Consequently, a reference picture buffer (luminance) for transferring the luminance data and a reference picture buffer (chrominance) for transferring the chrominance data are required in stage-2, and a reference picture buffer (luminance) for luminance-data motion compensation and a reference picture buffer (chrominance) for chrominance-data motion compensation are required in stage-3.

To sum up the matter, the motion detection device of the conventional art requires a pipeline of four stages, and ten pipeline buffers in total.

Fig. 13 is a structure drawing illustrating a pipeline of the motion detection device in Embodiment 2 of the present invention. According to the pipeline structure of the present embodiment, in stage-0, the data transfer for the full-pel-precision motion detection is performed; in stage-1, the full-pel-precision motion detection is performed first and the data transfer for the half-pel-precision motion detection is subsequently performed in response to the result of the full-pel-precision motion detection; in stage-2, the half-pel-precision motion detection and the data transfer for the motion compensation (chrominance data) are performed in parallel, and subsequently, the motion compensation is performed.

As described above, according to the motion detection device of the present embodiment, based on the result of the full-pel-precision motion detection of stage-1, the transfer region of data for the motion compensation (chrominance data) can be specified, and the data transfer for the motion compensation (luminance data and chrominance data) can be performed in parallel with the half-pel-precision motion detection in stage-2. Therefore, the required number of pipeline stages is three. The number of stages of the present embodiment is less by one than the number of stages of the motion detection device according to the conventional art illustrated in Fig. 12.

The pipeline buffers which are required in each pipeline stage are also shown in Fig. 13. The motion detection device of the present embodiment requires seven pipeline buffers in total. They are a reference picture buffer (luminance) for the luminance data in each stage, a current macroblock buffer (luminance and chrominance) for the luminance data and the chrominance data in each stage, and a reference picture buffer (chrominance) for the chrominance data in stage-2. Namely, in the motion detection device of the present embodiment, as the effect of omitting unnecessary stage-3, the number of pipeline buffers can be reduced to seven pieces from ten pieces in the motion detection device according to the conventional art shown in Fig. 12.

Embodiment 3

Fig. 14 is a block diagram illustrating a motion detection device in Embodiment 3 of the present invention. In Fig. 14, the same components as those in Fig. 1 are attached with the same reference symbols or numerals and the descriptions thereof are omitted.

The motion detection device of the present embodiment comprises a full-pel-precision motion detecting unit 21, a half-pel-precision motion detecting unit 22, local memories 31 and 32, an SDRAM 41, a DMA, controller 42, and a processor 20, as illustrated in Fig. 14.

In the motion detection device of the present embodiment, the half-pel-precision motion detection is performed after the full-pel-precision motion detection; however, the quarter-pel-precision motion detection is not performed. Pixel skipping for the reference picture shall not be performed in the half-pel-precision motion detection.

Fig. 15 is a flow chart for the motion detection device in Embodiment 3 of the present invention.

As illustrated in Fig. 15, in Step S51, the motion detection device of the present embodiment transfers the reference picture data for the full-pel-precision motion detection from the SDRAM 41 to the local memory 31.

In Step S52, the full-pel-precision motion detection is performed.

In Step S53, the reference picture data for the half-pel-precision motion detection is transferred from the SDRAM 41 to the local memory 32. The transfer of the reference picture data for the half-pel-precision motion detection may be performed in parallel with the transfer of the reference picture data for the full-pel-precision motion detection in Step S51, or alternatively, may be performed in parallel with the full-pel-precision motion detection in Step S52.

The transfer region of the reference picture data for the half-pel-precision motion detection is determined independently of the search result of the full-pel-precision motion detection. The method of the determination is the same as the method of the determination of the transfer region of the reference picture data for the quarter-pel-precision motion detection in Embodiment 1 of the present invention. (Refer to Fig. 6.) Namely, even if a full-pel-precision motion vector is determined in any position with respect to the macroblock currently in encoding, the transfer region of the reference picture data for the half-pel-precision motion detection is determined so that the reference picture data required for the half-pel-precision motion detection may surely be included in the transfer region.

In Step S54, the half-pel-precision motion detection is performed, using the reference picture data transferred for the half-pel-precision motion detection in Step S53, based on the search result of the full-pel-precision motion detection in Step S52.

In this way, according to the motion detection device of the present embodiment, the reference picture data for the half-pel-precision motion detection can be transferred, without waiting for the result of the full-pel-precision motion detection. Therefore, the waiting time for data in the half-pel-precision motion detection is reduced, and the latency of the macroblock processing improves.

Fig. 16 is a structure drawing illustrating a pipeline of the motion detection device in Embodiment 3 of the present invention. According to the motion detection device of the present embodiment, the reference picture data transfer for the half-pel-precision motion detection can be performed in stage-1. Consequently, the number of pipeline stages can be reduced by one.

Embodiment 4

A motion detection device of Embodiment 4 of the present invention possesses the same block configuration as the motion detection device of Embodiment 1 of the present invention shown in Fig. 1. Therefore, the motion detection device of the present embodiment is explained with reference to Fig. 1.

The motion detection device of the present embodiment combines Embodiment 1 and Embodiment 3 of the present invention, and performs full-pel-precision motion detection, half-pel-precision motion detection, and quarter-pel-precision motion detection. The motion detection device of the present embodiment can transfer the reference picture data for the half-pel-precision motion detection, without waiting for the result of the full-pel-precision motion detection, and can start transferring the reference picture data for the quarter-pel-precision motion detection, immediately after a motion vector is determined in the full-pel-precision motion detection.

Fig. 17 is a flow chart for the motion detection device in Embodiment 4 of the present invention. According to Fig. 17 and with concurrent reference to Fig. 1, operation of the motion detection device of the present embodiment is explained.

In Step S61, the reference picture data for the full-pel-precision motion detection is transferred.

In Step S62, the full-pel-precision motion detection is performed.

Simultaneously with Step S62, in Step S63, the reference picture data for the half-pel-precision motion detection is transferred.

In Step S64, the half-pel-precision motion detection is performed, using the reference picture data transferred for the half-pel-precision motion detection in Step S63, based on the search result of the full-pel-precision motion detection in Step S62.

Simultaneously with Step S64, in Step S65, the transfer of the reference picture data for the quarter-pel-precision motion detection is performed for the data transfer region which is determined based on the search result of the full-pel-precision motion detection in Step S62.

In Step S66, the quarter-pel-precision motion detection is performed, using the reference picture data transferred for the quarter-pel-precision motion detection in Step S65, based on the search result of the half-pel-precision motion detection in Step S64.

In this way, the motion detection device of the present embodiment can transfer the reference picture data for the half-pel-precision motion detection, without waiting for the result of the full-pel-precision motion detection. Therefore, the waiting time of the reference picture data for the half-pel-precision motion detection is reduced. Furthermore, the reference picture data for the quarter-pel-precision motion detection can be transferred without waiting for the result of the half-pel-precision motion detection. Therefore, the waiting time of the reference picture data for the quarter-pel-precision motion detection is reduced. Consequently, according to the motion detection device of the present embodiment, the latency of the macroblock processing improves drastically.

Fig. 18 is a structure drawing illustrating a pipeline of the motion detection device in Embodiment 4 of the present invention. As shown in Fig. 18, the motion detection device of the present embodiment can perform the transfer of the reference picture data for the half-pel-precision motion detection in stage-1, and can perform the transfer of the reference picture data for the quarter-pel-precision motion detection in stage-2. Consequently, in the motion detection device of the present embodiment, the number of pipeline stages can be reduced by two. The motion detection device of the present embodiment possesses the features that the latency of the macroblock processing is determined only by the execution time of the motion vector detection and that no delay arises due to the data transfer.

Embodiment 5

Fig. 19 is a block diagram illustrating a motion detection device in Embodiment 5 of the present invention. In Fig. 19, the same components as those in Fig. 1 are attached with the same reference symbols or numerals and the descriptions thereof are omitted.

The motion detection device of the present embodiment comprises a full-pel-precision motion detecting unit 21, a motion compensation unit 24, local memories 31 and 32, a SDRAM 41, a DMA controller 42, and a processor 20, as shown in Fig. 19.

In the motion detection device of the present embodiment, the motion compensation is performed after the full-pel-precision motion detection.

Fig. 20 is a flow chart for the motion detection device in Embodiment 5 of the present invention.

As shown in Fig. 20, in Step S71, the motion detection device of the present embodiment transfers the reference picture data for the full-pel-precision motion detection from the SDRAM 41 to the local memory 31.

In Step S72, the full-pel-precision motion detection is performed, using the reference picture data transferred to the local memory 31 in Step S71.

In Step S73, the reference picture data for the motion compensation is transferred from the SDRAM 41 to the local memory 32. The transfer of the reference picture data is performed in parallel with the full-pel-precision motion detection of Step S72.

In Step S74, the motion compensation is performed based on the search result of the full-pel-precision motion detection in Step S72, using the reference picture data transferred for the motion compensation in Step 573.

In this way, according to the motion detection device of the present embodiment, the reference picture data for the motion compensation can be transferred, without waiting for the result of the full-pel-precision motion detection. Therefore, the waiting time of the reference picture data for the motion compensation is reduced, and the latency of the macroblock processing improves.

Fig. 21 is a structure drawing illustrating a pipeline of the motion detection device in Embodiment 5 of the present invention. According to the motion detection device of the present embodiment, in stage-1, the reference picture data for the motion compensation detection can be transferred. Therefore, the number of pipeline stages can be reduced by one.

As explained above, according to the motion detection device of the present invention, the transfer of the reference picture data for the half-pel-precision motion detection and the transfer of the reference picture data for the quarter-pel-precision motion detection can be performed, without waiting for the result of the motion detection in the respectively upper layer. Therefore, the delay accompanying the transfer of the reference picture data does not arise, and the latency of the macroblock processing improves drastically. According to the motion detection device of the present invention, it becomes possible to reduce the number of pipeline stages and the number of pipeline buffers. Consequently, a high-speed motion detection device of motion pictures is realizable in a smaller size at low cost.

The purport of the present invention lies in realizing the motion detection device for motion picture encoding which can improve the latency of the macroblock processing accompanying the transfer of reference picture data, and moreover can reduce the required number of pipeline buffers. Consequently, various applications are possible unless it deviates from the purport of the present invention.

According to the present invention, it is possible to provide a motion detection device for motion picture encoding; the motion detection device can reduce the time delay in pipeline processing, can suppress the occurrence of frame delay, and moreover, can reduce the number of pipeline buffers.

Industrial Applicability

The motion detection device relating to the present invention can be employed in an encoding device of a motion picture, and the applicable field thereof.

Claims

1. A motion detection device operable to hierarchically detect a motion vector using correlation between a reference picture and a picture to be encoded, said motion detection device comprising:

a processor;
a first storage means operable to store a first reference picture for use in detection of a first-stage motion vector;
a first motion detection means operable to detect the first-stage motion vector using the first reference picture stored in said first storage means;
a second storage means operable to store a second reference picture for use in detection of a second-stage motion vector, the detection of the second-stage motion vector being performed by using the first-stage motion vector detected by said first motion detection means;
a second motion detection means operable to detect the second-stage motion vector using the second reference picture stored in said second storage means;
a third storage means operable to store a third reference picture for use in detection of a third-stage motion vector, the detection of the third-stage motion vector being performed by using the second-stage motion vector detected by said second motion detection means;
a third motion detection means operable to detect the third-stage motion vector using the third reference picture stored in said third storage means;
a main storage means operable to store the reference picture and the picture to be encoded; and
a data transfer control means operable to control data transfer between said main storage means and said first storage means, data transfer between said main storage means and said second storage means, and data transfer between said main storage means and said third storage means,
wherein when the first-stage motion vector is referenced to, said processor transfers data of the third reference picture from said main storage means to said third storage means, based on the detected first-stage motion vector, before the detection of the second-stage motion vector is brought to completion, and
wherein when the first-stage motion vector is not referenced to, said processor transfers data of the third reference picture from said main storage means to said third storage means, before the detection of the first-stage motion vector is brought to completion.

2. A motion detection device operable to hierarchically detect a motion vector using correlation between a reference picture and a picture to be encoded, said motion detection device comprising:

a processor;
a first storage means operable to store a first reference picture for use in detection of a first-stage motion vector;

a first motion detection means operable to detect the first-stage motion vector using the first reference picture stored in said first storage means;
a second storage means operable to store a second reference picture for use in detection of a second-stage motion vector, the detection of the second-stage motion vector being performed by using the first-stage motion vector detected by said first motion detection means;
a second motion detection means operable to detect the second-stage motion vector using the second reference picture stored in said second storage means;
a third storage means operable to store a third reference picture for use in motion compensation, which is performed by using the second-stage motion vector detected by said second motion detection means;
a motion compensation means operable to perform the motion compensation using the third reference picture stored in said third storage means;
a main storage means operable to store the reference picture and the picture to be encoded; and
a data transfer control means operable to control data transfer between said main storage means and said first storage means, data transfer between said main storage means and said second storage means, and data transfer between said main storage means and said third storage means,
wherein when the first-stage motion vector is referenced to, said processor transfers data of the third reference picture from said main storage means to said third storage means, based on the detected first-stage motion vector, before the detection of the second-stage motion vector is brought to completion, and
wherein when the first-stage motion vector is not referenced to, said processor transfers data of the third reference picture from said main storage means to said third storage means, before the detection of the first-stage motion vector is brought to completion.

3. A motion detection device operable to hierarchically detect a motion vector using correlation between a reference picture and a picture to be encoded, said motion detection device comprising:

a processor;
a first storage means operable to store a first reference picture for use in detection of a first-stage motion vector;
a first motion detection means operable to detect the first-stage motion vector using the first reference picture stored in said first storage means;

a second storage means operable to store a second reference picture for use in detection of a second-stage motion vector, the detection of the second-stage motion vector being performed by using the first-stage motion vector detected by said first motion detection means;
a second motion detection means operable to detect the second-stage motion vector using the second reference picture stored in said second storage means;
a main storage means operable to store the reference picture and the picture to be encoded; and
a data transfer control means operable to control data transfer between said main storage means and said first storage means and data transfer between said main storage means and said second storage means,
wherein said processor transfers data of the second reference picture from said main storage means to said second storage means, before the detection of the first-stage motion vector is brought to completion.

4. A motion detection device operable to detect a motion vector using correlation between a reference picture and a picture to be encoded, said motion detection device comprising:

a processor;
a first storage means operable to store a first reference picture for use in detection of a first-stage motion vector;
a first motion detection means operable to detect the first-stage motion vector using the first reference picture stored in said first storage means;
a second storage means operable to store a second reference picture for use in motion compensation, which is performed by using the first-stage motion vector detected by said first motion detection means;
a motion compensation means operable to perform the motion compensation using the second reference picture stored in said second storage means;
a main storage means operable to store the reference picture and the picture to be encoded; and
a data transfer control means operable to control data transfer between said main storage means and said first storage means and data transfer between said main storage means and said second storage means,
wherein said processor transfers data of the second reference picture from said main storage means to said second storage means, before the detection of the first-stage motion vector is brought to completion.

**5.** The motion detection device as defined in claim 1, wherein said first motion detection means detects a full-pel-precision motion vector.

**6.** The motion detection device as defined in claim 1, wherein said second motion detection means detects a half-pel-precision motion vector.

**7.** The motion detection device as defined in claim 1, wherein said third motion detection means detects a quarter-pel-precision motion vector.

**8.** The motion detection device as defined in claim 2, wherein said motion compensation means performs motion compensation of a luminance picture.

**9.** The motion detection device as defined in claim 2, wherein said motion compensation means performs motion compensation of a chrominance picture.

**10.** The motion detection device as defined in claim 1, wherein said first storage means and said second storage means are implemented with memories, and wherein said first storage means is greater than said second storage means in memory size.

**11.** The motion detection device as defined in claim 1, wherein said second storage means and said third storage means are implemented with memories, and wherein said second storage means is greater than said third storage means in memory size.

**12.** The motion detection device as defined in claim 1, wherein said second storage means is accessed by either of said data transfer control means and said second motion detection means.

**13.** The motion detection device as defined in claim 1, wherein said third storage means is accessed by either of said data transfer control means and said third motion detection means.

**14.** The motion detection device as defined in claim 2, wherein said third storage means is accessed by either of said data transfer control means and said motion compensation means.

**15.** The motion detection device as defined in claim 1, wherein data of the reference picture in a region required on the basis of the motion vector detected by said first motion detection means, is transferred from said second storage means to said third storage means.

**16.** The motion detection device as defined in claim 3, wherein data of the reference picture in a region required on the basis of the motion vector detected by said first motion detection means is transferred from said first storage means to said second storage means.

Fig. 1

## Fig. 2

```
┌─────────────────────┐
│    data transfer    │
│ forfull-pel-precision│  S31
│   motion detection  │
└─────────────────────┘
          │
          ▼
┌─────────────────────┐
│  full-pel-precision │  S32
│   motion detection  │
└─────────────────────┘
          │                        ┌─────────────────────┐
          │                        │  data transfer for  │
          │                        │   half-pel-precision │  S33
          │                        │   motion detection  │
          │                        └─────────────────────┘
          │                                   │
          │                                   ▼
┌─────────────────────┐          ┌─────────────────────┐
│  data transfer for  │          │  half-pel-precision │
│ quarter-pel-precision│  S35     │   motion detection  │  S34
│   motion detection  │          └─────────────────────┘
└─────────────────────┘                      │
          │◄──────────────────────────────────┘
          ▼
┌─────────────────────┐
│ quarter-pel-precision│  S36
│   motion detection  │
└─────────────────────┘
```

Fig. 3

# Fig. 4

Fig. 5

Fig. 6

Fig. 7

| | stage 0 | stage 1 | stage 2 | stage 3 | stage 4 |
|---|---|---|---|---|---|
| motion detection | | full-pel-precision motion detection | | half-pel-precision motion detection | quarter-pel-precision motion detection |
| DMA transfer processing of reference picture | data transfer for full-pel-precision motion detection | | data transfer for half-pel-precision motion detection | data transfer for quarter-pel-precision motion detection | |

Fig. 8

Fig. 9

```
┌─────────────────────────────────────────────────────────────────┐
│                                                                   │
│   ┌──────────────────────┐                                        │
│   │   data transfer for  │                                        │
│   │  full-pel-precision  │    S41                                 │
│   │   motion detection   │                                        │
│   └──────────────────────┘                                        │
│              │                                                     │
│              ▼                                                     │
│   ┌──────────────────────┐                                        │
│   │   full-pel-precision │    S42                                 │
│   │   motion detection   │                                        │
│   └──────────────────────┘                                        │
│              │                                                     │
│              │            ┌──────────────────────┐                │
│              │            │   data transfer for  │                │
│              │            │  half-pel-precision  │    S43         │
│              │            │   motion detection   │                │
│              │            └──────────────────────┘                │
│              │                       │                            │
│              ▼                       ▼                            │
│   ┌──────────────────────┐  ┌──────────────────────┐              │
│   │   data transfer for  │  │   half-pel-precision │              │
│   │   motion detection   │  S45   motion detection │    S44       │
│   └──────────────────────┘  └──────────────────────┘              │
│              │                       │                            │
│              ▼◄──────────────────────┘                            │
│   ┌──────────────────────┐                                        │
│   │   motion detection   │    S46                                 │
│   └──────────────────────┘                                        │
│                                                                   │
└───────────────────────────────────────────────────────────────────┘
```

25

Fig. 10

EP 1 768 420 A1

luminance
coordinate    0    0.5    1    1.5    2    2.5    3    3.5    4    4.5    5    5.5    -------

chrominance
coordinate    0        0.5        1        1.5        2        2.5

Fig. 11

EP 1 768 420 A1

Fp11  Hp11  Fp12

Hp12

luminance
pixel

luminance
coordinate    0    1    2    3    4    5    6    15    16    17    18

chrominance
coordinate    0    0.5    1    1.5    2    2.5    3    7.5    8    8.5    9

chrominance
pixel

Fp20    Hp20    Fp21    Hp21    Hp27    Fp28    Hp28    Fp29

○  full pel

○  half pel

Fig. 12

Fig. 13

|  | stage 0 | stage 1 | stage 2 |
|---|---|---|---|
| motion detection |  | full-pel precision motion detection | half-pel precision motion detection → motion compensation |
| DMA transfer processing of reference picture | data transfer for full-pel precision motion detection | data transfer for half-pel precision motion detection | data transfer for motion compensation |
| pipeline buffer | reference picture buffer (luminance) | reference picture buffer (luminance) | reference picture buffer (luminance) |
|  |  |  | reference picture buffer (chrominance) |
|  | current MB buffer (luminance/ chrominance) | current MB buffer (luminance/ chrominance) | current MB buffer (luminance/ chrominance) |

Fig. 14

Fig. 15

```
┌─────────────────────────────────────────────────────────────────────────────┐
│ ┌───────────────────────┐                                                      │
│ │  data transfer for    │                                                      │
│ │  full-pel-precision   │  S51                                                 │
│ │  motion detection     │                                                      │
│ └───────────┬───────────┘                                                      │
│             │                                                                  │
│             ▼                                                                  │
│ ┌───────────────────────┐       ┌─────────────────────────────┐              │
│ │  full-pel-precision   │  S52  │     data transfer for       │  S53         │
│ │  motion detection     │       │ half-pel-precision motion   │              │
│ │                       │       │        detection            │              │
│ └───────────┬───────────┘       └──────────────┬──────────────┘              │
│             │◄───────────────────────────────────┘                            │
│             ▼                                                                  │
│ ┌───────────────────────┐                                                      │
│ │  half-pel-precision   │  S54                                                 │
│ │  motion detection     │                                                      │
│ └───────────────────────┘                                                      │
└─────────────────────────────────────────────────────────────────────────────┘
```

Fig. 16

EP 1 768 420 A1

|  | stage 0 | stage 1 | stage 2 |
|---|---|---|---|
| motion detection |  | full-pel-precision motion detection | half-pel-precision motion detection |
| DMA transfer processing of reference picture | data transfer for full-pel-precision motion detection | data transfer for half-pel-precision motion detection |  |

**Fig. 17**

```
┌─────────────────────┐
│   data transfer for │
│  full-pel-precision │   S61
│   motion detection  │
└─────────────────────┘
          │
          ▼
┌─────────────────────┐        ┌─────────────────────┐
│  full-pel-precision │        │   data transfer for │
│   motion detection  │   S62  │  half-pel-precision │   S63
└─────────────────────┘        │   motion detection  │
          │                    └─────────────────────┘
          │                              │
          │                              │
          ▼    S65                        ▼
┌─────────────────────┐        ┌─────────────────────┐
│   data transfer for │        │  half-pel-precision │   S64
│ quarter-pel-precision│        │   motion detection  │
│   motion detection  │        └─────────────────────┘
└─────────────────────┘                  │
          │    S66                         │
          ▼                               │
┌─────────────────────┐                   │
│quarter-pel-precision │◄─────────────────┘
│   motion detection  │
└─────────────────────┘
```

**Fig. 18**

Fig. 19

EP 1 768 420 A1

Fig. 20

```
┌─────────────────────────────────────────────────────────────────────┐
│  ┌──────────────────┐                                                 │
│  │  data transfer for │                                               │
│  │  full-pel-precision│   S71                                         │
│  │  motion detection  │                                               │
│  └──────────────────┘                                                 │
│           │                                                           │
│           ▼                                                           │
│  ┌──────────────────┐          ┌──────────────────────┐              │
│  │  full-pel-precision│ S72      │  data transfer for     │  S73       │
│  │  motion detection  │          │  motion compensation   │            │
│  └──────────────────┘          └──────────────────────┘              │
│           │                                 │                         │
│           ▼◄───────────────────────────────┘                         │
│  ┌──────────────────┐                                                 │
│  │ motion compensation│  S74                                          │
│  └──────────────────┘                                                 │
└─────────────────────────────────────────────────────────────────────┘
```

Fig. 21

EP 1 768 420 A1

|  | stage 0 | stage 1 | stage 2 |
|---|---|---|---|
| motion detection |  | full-pel-precision motion detection | motion compensation |
| DMA transfer processing of reference picture | data transfer for full-pel-precision motion detection | data transfer for motion compensation |  |

Fig. 22

| full-pel-precision motion detecting section | half-pel-precision motion detecting section | motion compensation section |
|---|---|---|
| 1 | 2 | 3 |

| first local memory | second local memory | third local memory |
|---|---|---|
| 4 | 5 | 6 |

DMA controller
SDRAM I/F
7

SDRAM
8

## Fig. 23

```
┌─────────────────────────────────────────────────────┐
│                                                       │
│        ┌───────────────────────────────┐  ┌──┐       │
│        │  transfer of current picture   │  │S1│       │
│        └───────────────────────────────┘  └──┘       │
│                        │                              │
│                        ▼                              │
│        ┌───────────────────────────────┐  ┌──┐       │
│        │      transfer of reference     │  │S2│       │
│        │            picture             │  └──┘       │
│        └───────────────────────────────┘             │
│                        │                              │
│                        ▼                              │
│        ┌───────────────────────────────┐  ┌──┐       │
│        │    full-pel-precision motion   │  │S3│       │
│        │            detection           │  └──┘       │
│        └───────────────────────────────┘             │
│                        │                              │
│                        ▼                              │
│        ┌───────────────────────────────┐  ┌──┐       │
│        │      transfer of reference     │  │S4│       │
│        │            picture             │  └──┘       │
│        └───────────────────────────────┘             │
│                        │                              │
│                        ▼                              │
│        ┌───────────────────────────────┐  ┌──┐       │
│        │    half-pel-precision motion   │  │S5│       │
│        │            detection           │  └──┘       │
│        └───────────────────────────────┘             │
│                        │                              │
│                        ▼                              │
│        ┌───────────────────────────────┐  ┌──┐       │
│        │  transfer of chroma reference  │  │S6│       │
│        │            picture             │  └──┘       │
│        └───────────────────────────────┘             │
│                        │                              │
│                        ▼                              │
│        ┌───────────────────────────────┐  ┌──┐       │
│        │      motion compensation       │  │S7│       │
│        └───────────────────────────────┘  └──┘       │
│                                                       │
└─────────────────────────────────────────────────────┘
```

Fig. 24

○ full pel (luminance)

● skipped full pel (luminance)

Fig. 25

Fig. 26

```
┌ ─ ─ ─ ─ ─ ─ ─ ─ ─ ─ ─ ─ ─ ─ ─ ─ ─ ─ ─ ─ ┐
│                                         │
│      ┌─────────────────────┐            │
│      │  motion detection   │   S11      │
│      └─────────────────────┘            │
│                 │                       │
│                 ▼                       │
│      ┌─────────────────────┐            │
│      │ motion compensation │   S12      │
│      └─────────────────────┘            │
│                 │                       │
│                 ▼                       │
│      ┌─────────────────────┐            │
│      │       DCT/Q         │   S13      │
│      └─────────────────────┘            │
│                 │                       │
│                 ▼                       │
│      ┌─────────────────────┐            │
│      │        VLC          │   S14      │
│      └─────────────────────┘            │
│                                         │
└ ─ ─ ─ ─ ─ ─ ─ ─ ─ ─ ─ ─ ─ ─ ─ ─ ─ ─ ─ ─ ┘
```

Fig. 27

| motion detection (0) | motion detection (1) | motion detection (2) | motion detection (3) | motion detection (4) |
|---|---|---|---|---|
| | motion compensation (0) | motion compensation (1) | motion compensation (2) | motion compensation (3) |
| | | DCT (0) | DCT (1) | DCT (2) |
| | | | VLC (0) | VLC (1) |

time →

Fig. 28

| | |
|---|---|
| (m-1)-th layer's motion detection | S21 |
| data transfer for m-th layer's motion detection | S22 |
| m-th layer's motion detection | S23 |

**Fig. 29**

## INTERNATIONAL SEARCH REPORT

| International application No. |
|---|
| PCT/JP2005/012568 |

### A. CLASSIFICATION OF SUBJECT MATTER
Int.Cl$^7$ H04N7/32

According to International Patent Classification (IPC) or to both national classification and IPC

### B. FIELDS SEARCHED

Minimum documentation searched (classification system followed by classification symbols)
Int.Cl$^7$ H04N7/24-7/68

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 5-236466 A (NEC Corp.),<br>10 September, 1993 (10.09.93),<br>Par. Nos. [0014] to [0042]; Figs. 1 to 10<br>& EP 557948 A2　　　　& US 5473378 A | 2,4,8,9,14<br>16<br>1,3,5-7,<br>10-13,15 |
| X<br>Y<br>A | JP 6-197322 A (Matsushita Electric Industrial<br>Co., Ltd.),<br>15 July, 1994 (15.07.94),<br>Par. Nos. [0010] to [0014]; Fig. 1<br>(Family: none) | 3<br>16<br>1,2,4-15 |
| A | JP 11-167629 A (Matsushita Electric Industrial<br>Co., Ltd.),<br>22 June, 1999 (22.06.99),<br>Par. Nos. [0031] to [0041]; Figs. 19, 20<br>& EP 901061 A2　　　　& US 6173408 B1 | 1-16 |

| ☒ Further documents are listed in the continuation of Box C. | ☐ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>31 August, 2005 (31.08.05) | Date of mailing of the international search report<br>13 September, 2005 (13.09.05) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2005/012568

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-218474 A  (Mitsubishi Electric Corp.),<br>02 August, 2002 (02.08.02),<br>Full text; all drawings<br>& US 2002/136299 A1 | 1-16 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002218474 A

- JP 2001015872 A